# EUROPEAN PATENT SPECIFICATION

(11) **EP 4 401 411 B1**
(45) Date of publication and mention of the grant of the patent: **25.02.2026**
(21) Application number: 22897188.3
(22) Date of filing: 22.07.2022
(51) Int. Cl.: H04N 21/43, H04L 12/18, H04N 7/15

(54) **MINUTING METHOD, AND TERMINAL DEVICE AND MINUTING SYSTEM**
MINUTIERVERFAHREN SOWIE ENDGERÄTEVORRICHTUNG UND MINUTIERSYSTEM
PROCÉDÉ DE COMPTE-RENDU, ET DISPOSITIF TERMINAL ET SYSTÈME DE COMPTE-RENDU

(30) Priority: 26.11.2021 CN 202111424519
(43) Date of publication of application: 17.07.2024
(60) Divisional application: 26152707.1
(73) Proprietor: Huawei Technologies Co., Ltd., Shenzhen, Guangdong 518129 (CN)
(72) Inventor: ZHAO, Yiting, Shenzhen, Guangdong 518129 (CN)
(74) Representative: Pfenning, Meinig & Partner mbB
(86) International application number: PCT/CN2022/107393
(87) International publication number: WO 2023/093092

(56) References cited:
- CN-A- 113 326 387
- CN-A- 113 329 235
- CN-A- 113 329 237
- JP-A- 2019 061 594
- US-A1- 2008 037 514
- US-A1- 2014 219 433
- US-A1- 2014 219 433
- US-A1- 2015 312 518
- US-A1- 2017 201 387

## Description

### TECHNICAL FIELD

This application relates to the field of online conference technologies, and in particular, to a conference recording method, a terminal device, and a conference recording system.

### BACKGROUND

With rapid development of internet technologies, online conference applications (applications, APPs) have been widely used. Different users in different places may use an online conference application to join a same conference. This greatly facilitates the different users in the different places to join the conference.

The online conference application can provide the user with a function of holding an audio conference or a video conference. However, the online conference application also has many problems. For example, because participants using the online conference application are in the different places and different environments, the online conference is less serious than a formal conference, and a participant's participation status may be lower than that of a face-to-face conference. As a result, some conference key points are missed, or some other key information is missed in a recording process in which the participant is recording key information in the conference. Therefore, a conference record is more prominent for the online conference. After the conference, the user can implement a conference conclusion as an actual action based on the conference record. The online conference application usually generates the conference record in the following manner: automatically converting an audio of a participant in an online conference process into a text, and generating a dialog text of the entire online conference process, where the dialog text is used as the conference record for the user to view after the conference. When the user needs to search for target information in the conference process, the online conference application detects a keyword input by the user, searches, by using the keyword in the conference record obtained in the foregoing manner, for the target information that needs to be searched for, and outputs the target information for the user to view.

However, due to differences between oral expressions and written expressions, for a same intention, different users may have different expressions, or even a same user may have different expressions at different moments. As a result, the keyword input by the user cannot match the target information in the conference record. Therefore, the online conference application that obtains the conference record in the foregoing manner increases difficulty for the user to search for the required information after the conference. Consequently, the user cannot quickly and effectively locate the required target information.
US 2017/201387A1 concerns a mechanism for a time data capsule from an electronic conference. Operations include identifying meeting input sources related to the electronic conference, capturing respective data of the meeting input sources from a start through an end of the electronic conference, and maintaining and creating timestamps for the respective data that is captured. The timestamps are associated with the respective data. Operations include aligning the respective data along a timeline according to the timestamps associated with the respective data from the meeting input sources, converting the respective data into text equivalents and/or text descriptions with the timestamps retained, and identifying a trigger during the electronic conference that causes a timebox to be created with a beginning and an ending time. The operations include extracting the respective data for the timestamps that correspond to the timebox, and creating a package with the extracted respective data from the meeting input sources.
US 2015/312518A1 concerns improving audio conferencing services. One aspect relates to processing audio content of a conference. A first audio signal is received from a first conference participant, and a start and an end of a first utterance by the first conference participant are detected from the first audio signal. A second audio signal is received from a second conference participant, and a start and an end of a second utterance by the second conference participant is detected from the second audio signal. The second conference participant is provided with at least a portion of the first utterance, wherein at least one of start time, start point, and duration is determined based at least in part on the start, end, or both, of the second utterance.

### SUMMARY

Embodiments of this application provide a conference recording method, a terminal device, and a conference recording system, to provide a conference recording function of quickly and effectively locating required target information, and help improve efficiency of searching for and locating the target information in a conference record.

According to a first aspect, an embodiment of this application provides a conference recording method. The conference recording method is applied to a client that provides a function of an online conference, and the online conference includes an online audio conference or an online video conference. The method may include: detecting a trigger operation of an online conference end option or a trigger operation of an online conference record viewing option; and in response to the trigger operation of the online conference end option or the trigger operation of the online conference record viewing option, displaying an online conference review interface. The online conference review interface includes timelines of a plurality of participants and a plurality of audio identifiers distributed along the timelines. Each of the plurality of audio identifiers identifies a segment of audio data of a participant corresponding to the timeline on which the audio identifier is located. A start position of the audio identifier on the timeline indicates a start time of the segment of audio data of the participant, and an end position of the audio identifier on the timeline indicates an end time of the segment of audio data of the participant. The segment of audio data of the participant is generated by recording a conference speech voice signal of the participant in a time period from the start time to the end time.

Therefore, according to the first aspect of embodiments of this application, after the online conference ends, conference recording information in a participant dimension and a time dimension can be provided to the participant on the online conference review interface, and the participant can filter required information based on a participant and/or a time node, to reproduce all or a part of a conference scenario. The online conference review interface can provide a conference recording function of quickly and effectively locating the required target information, and help improve efficiency of searching for and locating the target information in a conference record.

One or more audio identifiers can be distributed on a timeline of a participant. A quantity of audio identifiers distributed on a timeline of a participant and a length of each audio identifier are related to speech time of the participant in the online conference. A start time of an audio identifier of a participant on the timeline of the participant is a start time of a speech of the participant in the online conference, and an end time of the audio identifier on the timeline of the participant is an end time of the speech of the participant.

In a possible design, the method further includes: detecting a first trigger operation corresponding to one of the plurality of audio identifiers, and displaying, in response to the first trigger operation, a keyword of audio data corresponding to the audio identifier.

In a possible design of this embodiment of this application, the keyword of the audio data corresponding to the audio identifier is displayed, so that the participant can filter the audio data by using the keyword. This improves efficiency of searching for and locating the target information in the conference record.

In a possible design, the method further includes: detecting a second trigger operation corresponding to the one of the plurality of audio identifiers, and playing, in response to the second trigger operation, the audio data corresponding to the audio identifier.

In a possible design of this embodiment of this application, the online conference review interface is provided. After the online conference ends, the participant clicks a corresponding audio identifier on the online conference review interface based on a participant and a time node, to play the audio data corresponding to the audio identifier, reproduce the speech of the participant in an audio form, and learn of specific speech content of the participant at the corresponding time point. This can locate the required information more simply, intuitively, and quickly, and help improve efficiency of searching for and locating the target information in the conference record. Replacing a text with the audio data can resolve problems such as finding failure and difficult understanding caused by inconsistency between oral expressions and text expressions. Further, a listening mode can be understood by the brain more quickly than a viewing mode, and information can be compared and filtered more quickly.

In a possible design, the method further includes: detecting a third trigger operation corresponding to a first audio identifier in the plurality of audio identifiers from a first timeline to a second timeline, where the first audio identifier is distributed on the first timeline, and at least one second audio identifier is distributed on the second timeline; in response to the third trigger operation, displaying the first audio identifier on the second timeline, and associating, based on a start time and an end time of first audio data corresponding to the first audio identifier, the first audio data with second audio data corresponding to the at least one second audio identifier; and detecting a fourth trigger operation corresponding to the first audio identifier or the at least one second audio identifier, and playing, in response to the fourth trigger operation, the first audio data and the second audio data corresponding to the at least one second audio identifier.

In a possible design of this embodiment of this application, if different participants all speak within a period of time, speech content of each participant can be separately listened to by clicking an audio identifier on a timeline of each participant, or a plurality of audio identifiers can be associated through the third trigger operation, so that speech content of participants corresponding to the plurality of audio identifiers is simultaneously played. This can reproduce a conference discussion scenario. Especially, for content heatedly discussed in the conference, a viewpoint of each person may not be grasped in the conference due to the heated discussion. After the conference, speech content of different participants may be split, converged, and repeatedly analyzed based on the audio identifier. This can grasp viewpoints of the different participants in the conference.

In a possible design, there is an intersection between a time period of the first audio identifier and a time period of the at least one second audio identifier, and the playing the first audio data and the second audio data corresponding to the at least one second audio identifier includes: playing, based on a time location of the first audio identifier on the second timeline and a time location of the at least one second audio identifier on the second timeline, at least two of a non-intersection part of the first audio data, an intersection part of the first audio data and the second audio data corresponding to the at least one second audio identifier, or a non-intersection part of the second audio data corresponding to the at least one second audio identifier.

In a possible design, the method further includes: detecting a fifth trigger operation corresponding to the first audio identifier, in response to the fifth trigger operation, displaying the first audio identifier on the first timeline, and dissociating the first audio data from the second audio data corresponding to the at least one second audio identifier. The disassociation is used to independently play the first audio data and the second audio data corresponding to the second audio identifier.

In a possible design of this embodiment of this application, the fifth trigger operation can be used to disassociate with a plurality of audio identifiers, to independently play speech content of a participant corresponding to the plurality of audio identifiers, so that audio data of a participant can be flexibly selected and played. This can flexibly reproduce some information of the conference discussion scenario at that time, and improve efficiency of searching for and locating the target information in the conference record.

In a possible design, before the detecting a trigger operation of an online conference end option or a trigger operation of an online conference record viewing option, the method further includes: recording and generating at least one piece of audio data of a participant that uses the client, and recording a start time and an end time of the at least one piece of audio data on a timeline of the participant; and sending the start time and the end time of the at least one piece of audio data on the timeline of the participant and the at least one piece of audio data to a server. The start time and the end time of the at least one piece of audio data on the timeline of the participant and the at least one piece of audio data are used to generate the online conference review interface.

For example, the participant that uses the client has three segments of speeches in the online conference, three pieces of audio data of the participant are recorded and generated, and a start time and an end time of each of the three pieces of audio data on the timeline of the participant are recorded. One of the three pieces of audio data is used as an example, a start time of the audio data on the timeline of the participant is a start time of a segment of speech of the participant, and an end time of the audio data on the timeline of the participant is an end time of the segment of speech of the participant.

In a possible design, the start time and the end time of the at least one piece of audio data on the timeline of the participant and the at least one piece of audio data are stored in at least one storage unit, and the at least one storage unit is connected in series by using a time pointer of the participant.

In a possible design, the method further includes: detecting a sixth trigger operation corresponding to the one of the plurality of audio identifiers, and displaying, in response to the sixth trigger operation, a thumbnail of video data corresponding to the audio identifier. The video data corresponding to the audio identifier is generated by recording a main interface picture in a time period between a start time and an end time of audio data corresponding to the audio identifier.

In a possible design of this embodiment of this application, a main interface picture video is recorded, and audio data and video data of each participant are associated based on time information, so that when the online conference review interface is displayed, the thumbnail of the video data corresponding to the audio identifier is displayed based on the detected sixth trigger operation. The thumbnail of the video data associated with the audio data is displayed, so that the participant can filter the audio data and the video data by using the thumbnail. This improves efficiency of searching for and locating the target information in the conference record.

In a possible design, the method further includes: detecting a seventh trigger operation of the thumbnail, and playing, in response to the seventh trigger operation, the video data and the audio data that are corresponding to the audio identifier.

In a possible design of this embodiment of this application, the video data and the audio data that are corresponding to the audio identifier are played in response to the seventh trigger operation, so that the conference scenario at that time is completely reproduced in a manner of combining an audio and a video. This accelerates a process of comparing and determining the target information.

In a possible design, the online conference review interface further includes at least one annotation identifier, the at least one annotation identifier is distributed on a timeline of at least one participant, and each of the at least one annotation identifier identifies an annotation of a participant corresponding to the timeline on which the annotation identifier is located at a time point at which the annotation identifier is located.

In a possible design of this embodiment of this application, an annotation identifier generated by an annotation action performed by the participant at a corresponding time point is presented on the online conference review interface, so that the participant can quickly locate a time node of key content by using the annotation identifier after the conference ends.

The at least one annotation identifier can include an annotation identifier obtained when each participant serves as a speaker. This can ensure that the annotation identifier has corresponding annotation content in the conference record. The at least one annotation identifier can further include an annotation identifier of a participant that uses the client in this embodiment. In this way, different clients can obtain conference records with personalized annotations for different clients to view independently.

In a possible design, the method further includes: detecting an eighth trigger operation corresponding to one of the at least one annotation identifier, and playing, in response to the eighth trigger operation, audio data, or audio data and video data at a time point at which the annotation identifier is located.

In a possible design, the timelines of the plurality of participants and the plurality of audio identifiers distributed along the timelines are located in a timeline area of the online conference review interface, and the online conference review interface further includes a video display area. The method further includes:
detecting an operation of zooming out the timeline area, and in response to the operation of zooming out the timeline area, zooming out the timeline area, zooming out a distance between timelines of the plurality of participants, and zooming in the video display area; or detecting an operation of zooming in the timeline area, and in response to the operation of zooming in the timeline area, zooming in the timeline area and zooming out the video display area.

In a possible design of this embodiment of this application, the timeline area is zoomed out, and the video area is zoomed in, so that video content is watched more clearly; or the timeline area is zoomed in and the video area is zoomed out, so that the timeline of each participant is separated, and audio data and/or video data corresponding to audio identifiers of different participants are flexibly played. This can flexibly adjust the timeline area and the video display area, and meet a user requirement.

In a possible design, when the distance between the timelines of the plurality of participants is zoomed out until the timelines of the plurality of participants completely overlap, at least two audio identifiers in the plurality of audio identifiers overlap each other. The method further includes:
detecting a tenth trigger operation corresponding to two audio identifiers that overlap each other, and in response to the tenth trigger operation, displaying one of the two audio identifiers on the timeline, and displaying the other audio identifier above or below the timeline, so that the two audio identifiers do not overlap.

In a possible design of this embodiment of this application, by zooming out the timeline area, the timelines of the plurality of participants are combined into one timeline, and audio data of the plurality of participants is associated. The plurality of pieces of associated audio data are applicable to an overall review of the entire online conference for a user. After the two audio identifiers are combined into the one timeline, the tenth trigger operation can be performed, so that the two audio identifiers do not overlap, and audio data corresponding to different audio identifiers is independently played. This can flexibly reproduce the conference content.

According to a second aspect, an embodiment of this application provides a terminal device, including a processor, a memory, and a display. The memory and the display are coupled to the processor. The memory is configured to store computer program code. The computer program code includes computer instructions of a client that provides a function of an online conference, and the online conference includes an online audio conference or an online video conference. When the processor reads the computer instructions from the memory, the terminal device is enabled to perform the following operations:
detecting a trigger operation of an online conference end option or a trigger operation of an online conference record viewing option; and
in response to the trigger operation of the online conference end option or the trigger operation of the online conference record viewing option, displaying an online conference review interface, where the online conference review interface includes timelines of a plurality of participants and a plurality of audio identifiers distributed along the timelines, each of the plurality of audio identifiers identifies a segment of audio data of a participant corresponding to a timeline on which the audio identifier is located, a start position of the audio identifier on the timeline indicates a start time of the segment of audio data of the participant, an end position of the audio identifier on the timeline indicates an end time of the segment of audio data of the participant, and the segment of audio data of the participant is generated by recording a conference speech voice signal of the participant in a time period from the start time to the end time.

In a possible design, the terminal device further performs the following operations: detecting a first trigger operation corresponding to one of the plurality of audio identifiers, and displaying, in response to the first trigger operation, a keyword of audio data corresponding to the audio identifier.

In a possible design, the terminal device further performs the following operations: detecting a second trigger operation corresponding to the one of the plurality of audio identifiers, and playing, in response to the second trigger operation, the audio data corresponding to the audio identifier.

In a possible design, the terminal device further performs the following operations: detecting a third trigger operation corresponding to a first audio identifier in the plurality of audio identifiers from a first timeline to a second timeline, where the first audio identifier is distributed on the first timeline, and at least one second audio identifier is distributed on the second timeline; in response to the third trigger operation, displaying the first audio identifier on the second timeline, and associating, based on a start time and an end time of first audio data corresponding to the first audio identifier, the first audio data with second audio data corresponding to the at least one second audio identifier; and detecting a fourth trigger operation corresponding to the first audio identifier or the at least one second audio identifier, and playing, in response to the fourth trigger operation, the first audio data and the second audio data corresponding to the at least one second audio identifier.

In a possible design, there is an intersection between a time period of the first audio identifier and a time period of the at least one second audio identifier, and the playing the first audio data and the second audio data corresponding to the at least one second audio identifier includes: playing, based on a time location of the first audio identifier on the second timeline and a time location of the at least one second audio identifier on the second timeline, at least two of a non-intersection part of the first audio data, an intersection part of the first audio data and the second audio data corresponding to the at least one second audio identifier, or a non-intersection part of the second audio data corresponding to the at least one second audio identifier.

In a possible design, the terminal device further performs the following operations: detecting a fifth trigger operation corresponding to the first audio identifier, in response to the fifth trigger operation, displaying the first audio identifier on the first timeline, and dissociating the first audio data from the second audio data corresponding to the at least one second audio identifier, where the disassociation is used to independently play the first audio data and the second audio data corresponding to the second audio identifier.

In a possible design, before the detecting a trigger operation of an online conference end option or a trigger operation of an online conference record viewing option, the terminal device further performs the following operations: recording and generating at least one piece of audio data of a participant that uses the client, and recording a start time and an end time of the at least one piece of audio data on a timeline of the participant; and sending the start time and the end time of the at least one piece of audio data on the timeline of the participant and the at least one piece of audio data to a server. The start time and the end time of the at least one piece of audio data on the timeline of the participant and the at least one piece of audio data are used to generate the online conference review interface.

In a possible design, the start time and the end time of the at least one piece of audio data on the timeline of the participant and the at least one piece of audio data are stored in at least one storage unit, and the at least one storage unit is connected in series by using a time pointer of the participant.

In a possible design, the terminal device further performs the following operations: detecting a sixth trigger operation corresponding to the one of the plurality of audio identifiers, and displaying, in response to the sixth trigger operation, a thumbnail of video data corresponding to the audio identifier. The video data corresponding to the audio identifier is generated by recording a main interface picture in a time period between a start time and an end time of audio data corresponding to the audio identifier.

In a possible design, the terminal device further performs the following operations: detecting a seventh trigger operation of the thumbnail, and playing, in response to the seventh trigger operation, the video data and the audio data that are corresponding to the audio identifier.

In a possible design, the online conference review interface further includes at least one annotation identifier, the at least one annotation identifier is distributed on a timeline of at least one participant, and each of the at least one annotation identifier identifies an annotation of a participant corresponding to the timeline on which the annotation identifier is located at a time point at which the annotation identifier is located.

In a possible design, the terminal device further performs the following operations: detecting an eighth trigger operation corresponding to one of the at least one annotation identifier, and playing, in response to the eighth trigger operation, audio data, or audio data and video data at a time point at which the annotation identifier is located.

In a possible design, the timelines of the plurality of participants and the plurality of audio identifiers distributed along the timelines are located in a timeline area of the online conference review interface, and the online conference review interface further includes a video display area. The terminal device further performs the following operations: detecting an operation of zooming out the timeline area, and in response to the operation of zooming out the timeline area, zooming out the timeline area, zooming out a distance between the timelines of the plurality of participants, and zooming in the video display area; or detecting an operation of zooming in the timeline area, and in response to the operation of zooming in the timeline area, zooming in the timeline area and zooming out the video display area.

In a possible design, when the distance between the timelines of the plurality of participants is zoomed out until the timelines of the plurality of participants completely overlap, at least two audio identifiers in the plurality of audio identifiers overlap each other, and the terminal device further performs the following operations: detecting a tenth trigger operation corresponding to two audio identifiers that overlap each other, and in response to the tenth trigger operation, displaying one of the two audio identifiers on the timeline, and displaying the other audio identifier above or below the timeline, so that the two audio identifiers do not overlap.

According to a third aspect, an embodiment of this application provides an apparatus. The apparatus is included in a terminal device, and the apparatus has a function of implementing behavior of the terminal device in any method according to the first aspect or the possible implementations of the first aspect. The function may be implemented by hardware, or may be implemented by hardware executing corresponding software. The hardware or the software includes at least one module or unit corresponding to the foregoing function, for example, a communication module or unit and a processing module or unit.

According to a fourth aspect, an embodiment of this application provides a computer-readable storage medium, including computer instructions. When the computer instructions are run on a terminal device, the terminal device is enabled to perform the method according to any one of the first aspect or the possible implementations of the first aspect.

According to a fifth aspect, an embodiment of this application provides a computer program product. When the computer program product runs on a computer, the computer is enabled to perform the method according to any one of the first aspect and the possible implementations of the first aspect.

According to a sixth aspect, an embodiment of this application provides a conference recording system. The conference recording system may include a server and a plurality of clients, the server separately establishes a communication connection to the plurality of clients, and the plurality of terminal devices are separately configured to perform the method according to any one of the first aspect or the possible implementations of the first aspect.

The terminal device, the apparatus, the computer storage medium, the computer program product, or the conference recording system provided in embodiments of this application is configured to perform the corresponding methods provided above. Therefore, for beneficial effect that can be achieved, refer to the beneficial effect of the corresponding methods provided above. Details are not described herein again.

### BRIEF DESCRIPTION OF DRAWINGS

FIG. 1 is a schematic diagram of an architecture of an online conference system according to an embodiment of this application;
FIG. 2 is a schematic diagram of a four (N=4)-person online conference system according to an embodiment of this application;
FIG. 3 is a schematic diagram of a structure of a terminal device 300 (for example, a mobile phone) according to an embodiment of this application;
FIG. 4 is a schematic diagram of a structure of a server 400 according to an embodiment of this application;
FIG. 5 is a flowchart of a conference recording method according to an embodiment of this application;
FIG. 6A is a schematic diagram of a user interface for an online conference according to an embodiment of this application;
FIG. 6B is a schematic diagram of a user interface for an online conference according to an embodiment of this application;
FIG. 7 is a schematic diagram of a user interface for an online conference according to an embodiment of this application;
FIG. 8 is a schematic diagram of a storage manner of a conference recording method according to an embodiment of this application;
FIG. 9A and FIG. 9B are a flowchart of a conference recording method according to an embodiment of this application;
FIG. 10 is a schematic diagram of a user interface for an online conference according to an embodiment of this application;
FIG. 11 is a schematic diagram of a user interface for an online conference according to an embodiment of this application;
FIG. 12 is a flowchart of a conference recording method according to an embodiment of this application;
FIG. 13 is a schematic diagram of a user interface for an online conference according to an embodiment of this application;
FIG. 14 is a flowchart of a conference recording method according to an embodiment of this application;
FIG. 15 is a schematic diagram of a user interface for an online conference according to an embodiment of this application;
FIG. 16 is a flowchart of a conference recording method according to an embodiment of this application;
FIG. 17 is a schematic diagram of a user interface for an online conference according to an embodiment of this application;
FIG. 18 is a schematic diagram of a user interface for an online conference according to an embodiment of this application;
FIG. 19 is a schematic diagram of a user interface for an online conference according to an embodiment of this application; and
FIG. 20 is a schematic diagram of composition of a conference recording apparatus according to an embodiment of this application.

### DESCRIPTION OF EMBODIMENTS

The following describes in detail a conference recording method, a terminal device, and a conference recording system that are provided in embodiments of this application with reference to the accompanying drawings.

In the specification and accompanying drawings of this application, the terms "first", "second", and the like are intended to distinguish between different objects or distinguish between different processing of a same object, but do not indicate a particular order of the objects.

In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the descriptions of this application, unless otherwise specified, "a plurality of" means two or more than two. A term "and/or" in this specification describes only an association relationship between associated objects and indicates that there may be three relationships. For example, A and/or B may represent the following three cases: Only A exists, both A and B exist, and only B exists.

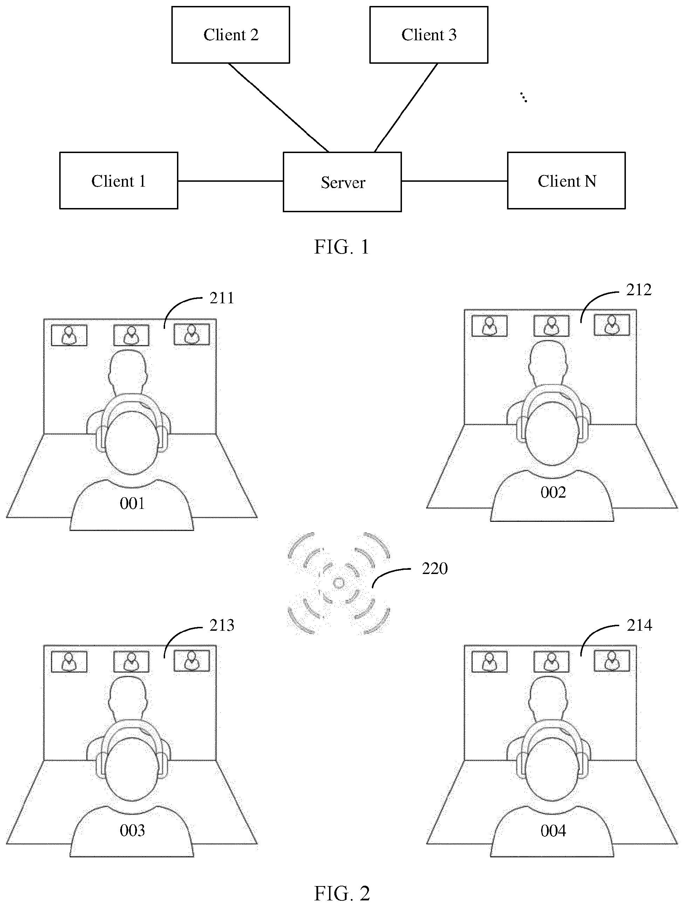

FIG. 1 is a schematic diagram of an architecture of an online conference system according to an embodiment of this application. The online conference system may include a server and a plurality of clients. The server can communicate with the plurality of clients. Communication connections may be established between the plurality of clients by using the server. The plurality of clients may be a client 1, a client 2, ..., a client N-1, a client N, and the like shown in FIG. 1. N is any integer greater than 1.

A function of an online conference function may be provided for N users (hereinafter referred to as participants) by using the server, the client 1, the client 2, ..., the client N-1, and the client N.

In this embodiment of this application, an example in which one client corresponds to one participant is used for description, that is, one participant uses one client to access an online conference. Different participants can use different clients to access the online conference. Audio data or video data between clients that access the online conference is synchronized. Certainly, it may be understood that one client may also correspond to a plurality of participants. For example, a plurality of participants in a group use one client to access the online conference. This is not limited in embodiments of this application.

That audio data or video data between the clients that access the online conference is synchronized means that a client used by a participant serving as a speaker may synchronize audio data or video data of the speaker to another client that accesses the online conference. The participant serving as the speaker can be switched during the conference.

The client 1, the client 2, ..., the client N-1, and the client N may be distributed at different physical locations. For example, the client 1 is located at an office location 1 in a city 1, the client 2 is located at an office location 2 in the city 1, and the client N-1 is located at an office location 3 in a city 3. Examples are not described in embodiments of this application.

The client 1, the client 2, ..., the client N-1, and the client N may be separately used as a user interface of the online conference. A participant can start a client corresponding to the participant to access the online conference, that is, establish a communication connection with the server and invoke an online conference service provided by the server.

The server may provide the online conference service for the client 1, the client 2, ..., the client N-1, and the client N. The client 1 is used as an example. The server may record audio/video content by invoking a microphone/display of the client 1 by using the client 1, and establish a timeline for each participant, so that audio/video content of different participants is linked to the timeline of the participant, and an online conference review interface is provided after the conference for the participants to review a conference scenario.

In this embodiment of this application, any client may be hardware (for example, a terminal device), or may be software (for example, an APP). For example, if the client is a terminal device, the terminal device (which may also be referred to as user equipment (user equipment, UE)) is a device having a wireless transceiver function, and may be deployed on land, including an indoor or outdoor device, a handheld device, or a vehicle-mounted device; may be deployed on water (for example, on a ship); or may be deployed in the air (for example, on an airplane, a balloon, or a satellite). A terminal may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a wireless terminal in an internet of things (internet of things, IoT), or the like. If the client is an application, the application may be deployed on any one of the foregoing terminal devices. For example, the application may be deployed on a mobile phone, a tablet, a personal computer (personal computer, PC), a smart band, a stereo, a television, a smartwatch, or another terminal device. A specific form of the terminal device is not specifically limited in embodiments of this application.

The server may be one or more physical servers (one physical server is used as an example in FIG. 1), or may be a computer cluster, or may be a virtual machine or a cloud server in a cloud computing scenario, or the like.

It should be noted that, in embodiments of this application, the application may be an application built in the terminal device, or may be an application that is provided by a third-party service provider and that is installed by a user. This is not specifically limited herein.

The following embodiment is described by using an example in which a client is an application that provides a function of an online conference.

N=4 is used as an example. FIG. 2 is a schematic diagram of a four (N=4)-person online conference system according to an embodiment of this application. As shown in FIG. 2, the four-person online conference system includes four clients (211, 212, 213, and 214) and a server 220. The four clients (211, 212, 213, and 214) may be separately deployed on different terminal devices. A participant corresponding to the client 211 (that is, a user who joins an online conference by using the client 211) is a participant 001, a participant corresponding to the client 212 is a participant 002, a participant corresponding to the client 213 is a participant 003, and a participant corresponding to the client 214 is a participant 004.

When the participant 001 serves as a speaker, the client 211 may schedule a microphone of a terminal device corresponding to the client 211 to collect a conference speech voice signal of the participant 001, to obtain a segment of audio data of the participant 001. The client 211 transmits the segment of audio data of the participant 001 to the client 212, the client 213, and the client 214 by using the server 220. The client 212, the client 213, and the client 214 may play the audio data, so that the participant 002, the participant 003, and the participant 004 receive the conference speech voice signal of the participant 001.

In some embodiments, the client 211 may further schedule a display of the terminal device corresponding to the client 211 to collect display content on a display corresponding to the participant 001, to obtain a segment of video data (which may also be referred to as screen recording data) of the participant 001. The client 211 transmits the segment of video data of the participant 001 to the client 212, the client 213, and the client 214 by using the server 220. The client 212, the client 213, and the client 214 may play the video data, so that the participant 002, the participant 003, and the participant 004 receive the display content on the display corresponding to the participant 001.

The server in this embodiment of this application may allocate a timeline to each participant, so that audio/video data of different participants is linked to respective timelines, and an online conference review interface is provided after the conference for the participants to review a conference scenario. For example, the server 220 in FIG. 2 may allocate a timeline to each of the participant 001, the participant 002, the participant 003, and the participant 004. For the segment of audio data of the participant 001, the server 220 may store a start time and an end time of the audio data, and the audio data, and associate the start time and the end time of the audio data, and the audio data with the timeline of the participant 001, so that the online conference review interface is generated after the online conference ends. The online conference review interface may be used by the participant 001, the participant 002, the participant 003, or the participant 004 to reproduce all or a part of the conference scenario after the online conference ends. The participant 001, the participant 002, the participant 003, or the participant 004 may play the conference speech voice signal of the participant by performing an operation on the online conference review interface.

Similarly, for the segment of video data of the participant 001, the server 220 may also store a start time and an end time of the video data, and the video data, and associate the start time and the end time of the video data, and the video data with the timeline of the participant 001, so that the online conference review interface is generated after the online conference ends. The online conference review interface may be used by the participant 001, the participant 002, the participant 003, or the participant 004 to reproduce all or a part of the conference scenario after the online conference ends. The participant 001, the participant 002, the participant 003, or the participant 004 may play the display content on the display corresponding to the participant by performing an operation on the online conference review interface.

It should be noted that the timeline of the participant may be implemented by using identification information and time information of the participant. The identification information of the participant may be an identity (identity document, id) of the participant, an identifier of a terminal device used by the participant, a mobile phone number of the participant, or the like. This is not specifically limited in this embodiment of this application. The time information may be time information of any time zone, for example, Beijing time.

Therefore, different from a manner in which a dialog during an entire conference is recorded by using a text and then information is searched for based on a keyword, a conference recording method in embodiments of this application can store the audio/video data of the participant from a participant dimension and a time dimension. In this way, after the online conference ends, conference recording information in the participant dimension and the time dimension can be provided to the participant on the online conference review interface, and the participant can filter required information based on a participant and/or a time node, to reproduce all or a part of the conference scenario. The conference recording method in embodiments of this application can provide a conference recording function of quickly and effectively locating the required target information, and help improve efficiency of searching for and locating the target information in a conference record. For a specific implementation, refer to the illustration of the following embodiments.

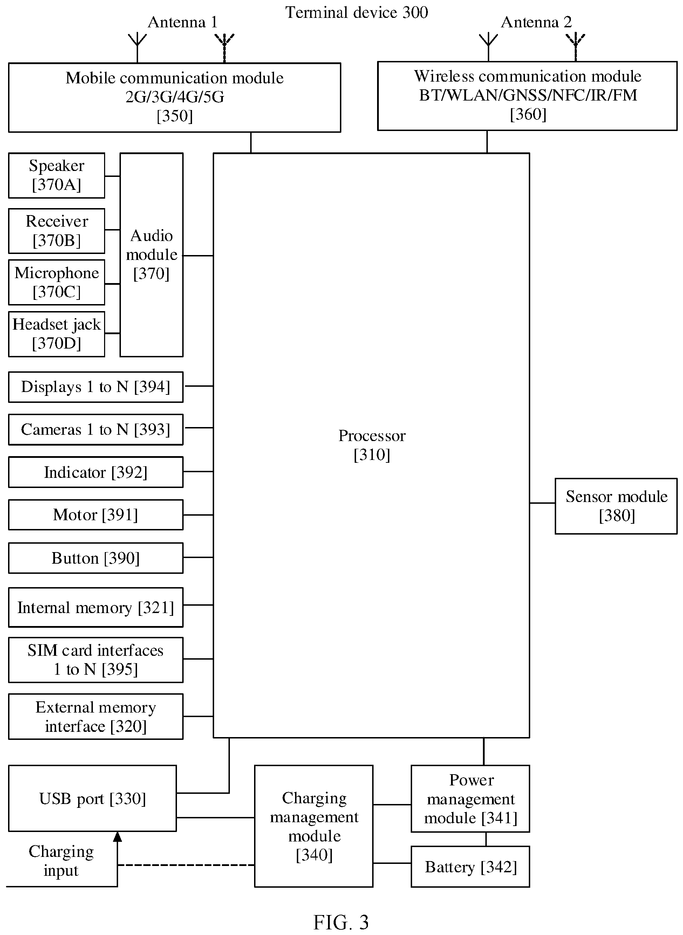

FIG. 3 is a schematic diagram of a structure of a terminal device 300 (for example, a mobile phone) according to an embodiment of this application. It should be understood that the structure shown in FIG. 3 constitutes no specific limitation on the terminal device 300. In some other embodiments of this application, the terminal device 300 may include more or fewer parts than those in the structure shown in FIG. 3, or combine some parts, or split some parts, or have different part arrangements. Various parts shown in FIG. 3 may be implemented in hardware including one or more signal processing and/or application-specific integrated circuits, software, or a combination of hardware and software.

For example, the terminal device 300 may include a processor 310, an external memory interface 320, an internal memory 321, a universal serial bus (universal serial bus, USB) port 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor 380, a button 390, a motor 391, an indicator 392, a camera 393, a display 394, and a subscriber identification module (subscriber identification module, SIM) card interface 395. It can be understood that the structure illustrated in this embodiment does not constitute a specific limitation on the terminal device 300. In some other embodiments of this application, the terminal device 300 may include more or fewer parts than those shown in the figure, or combine some parts, or split some parts, or have different part arrangements. The parts shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. In some embodiments, the terminal device 300 may alternatively include one or more processors 310. The controller may be a nerve center and a command center of the terminal device 300. The controller may generate an operation control signal based on instruction operation code and a time sequence signal, to complete control of instruction fetching and instruction execution. A memory may be disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor 310 may directly invoke the instructions or the data from the memory. In this way, repeated access is avoided, waiting time of the processor 310 is reduced, and system efficiency of the terminal device 300 is improved.

In some embodiments, the processor 310 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) port, and/or the like. The USB port 330 is a port that conforms to a USB standard specification, and may be specifically a mini USB port, a micro USB port, a USB Type-C port, or the like. The USB port 130 may be configured to connect to a charger to charge the terminal device 300, or may be configured to transmit data between the terminal device 300 and a peripheral device, or may be configured to connect to a headset for playing audio through the headset.

It can be understood that an interface connection relationship between the modules illustrated in this embodiment is only an example for description, and does not constitute a limitation on the structure of the terminal device 300. In some other embodiments of this application, the terminal device 300 may alternatively use an interface connection manner different from that in the foregoing embodiment, or use a combination of a plurality of interface connection manners.

The charging management module 340 is configured to receive a charging input from a charger. The charger may be a wireless charger or a wired charger. In some embodiments of wired charging, the charging management module 340 may receive a charging input from the wired charger through the USB port 330. In some embodiments of wireless charging, the charging management module 340 may receive a wireless charging input through a wireless charging coil of the terminal device 300. The charging management module 340 may further supply power to the terminal device 300 by using the power management module 341 while charging the battery 342.

The power management module 341 is configured to be connected to the battery 342, the charging management module 340, and the processor 310. The power management module 341 receives an input of the battery 342 and/or the charging management module 340, and supplies power to the processor 310, the internal memory 321, the display 394, the camera 393, the wireless communication module 360, and the like. The power management module 341 may further be configured to monitor parameters such as a battery capacity, a battery cycle count, and a battery health status (electric leakage or impedance). In some other embodiments, the power management module 341 may alternatively be disposed in the processor 310. In some other embodiments, the power management module 341 and the charging management module 340 may alternatively be disposed in a same device.

A wireless communication function of the terminal device 300 may be implemented through the antenna 1, the antenna 2, the mobile communication module 350, the wireless communication module 360, the modem processor, the baseband processor, and the like. The antenna 1 and the antenna 2 are configured to transmit and receive an electromagnetic wave signal. Each antenna in the terminal device 300 can be configured to cover one or more communication frequency bands. Different antennas may be multiplexed, to improve antenna utilization. For example, the antenna 1 may be multiplexed as a diversity antenna of a wireless local area network. In some other embodiments, the antenna may be used in combination with a tuning switch.

The mobile communication module 350 may provide a wireless communication solution that is applied to the terminal device 300 and that is used for 2G, 3G, 4G, 5G, and the like. The mobile communication module 150 may include at least one filter, a switch, a power amplifier, a low noise amplifier, and the like. The mobile communication module 350 may receive an electromagnetic wave through the antenna 1, perform processing such as filtering or amplification on the received electromagnetic wave, and transmit a processed electromagnetic wave to the modem processor for demodulation. The mobile communication module 350 may further amplify a signal modulated by the modem processor, and convert an amplified signal into an electromagnetic wave for radiation through the antenna 1. In some embodiments, at least some functional modules in the mobile communication module 350 may be disposed in the processor 310. In some embodiments, at least some functional modules in the mobile communication module 350 may be disposed in a same device as at least some modules in the processor 310.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 370A, the receiver 370B, or the like), or displays an image or video by using the display 394. In some embodiments, the modem processor may be an independent device. In some other embodiments, the modem processor may be independent of the processor 310, and is disposed in a same device as the mobile communication module 350 or another functional module.

The wireless communication module 360 may provide a solution, applied to the terminal device 300, to wireless communication including a wireless local area network (wireless local area network, WLAN), Bluetooth, a global navigation satellite system (global navigation satellite system, GNSS), frequency modulation (frequency modulation, FM), NFC, an infrared (infrared, IR) technology, and the like. The wireless communication module 360 may be one or more devices integrating at least one communication processing module. The wireless communication module 360 receives an electromagnetic wave through the antenna 2, performs frequency modulation and filtering processing on the electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2.

In some embodiments, the antenna 1 of the terminal device 300 is coupled to the mobile communication module 150, and the antenna 2 is coupled to the wireless communication module 360, so that the terminal device 300 can communicate with a network and another device by using a wireless communication technology. The wireless communication technology may include a GSM, a GPRS, CDMA, WCDMA, TD-SCDMA, LTE, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 300 implements a display function by using the GPU, the display 394, the application processor, and the like. The GPU is a microprocessor for image processing, and is connected to the display 394 and the application processor. The GPU is configured to: perform mathematical and geometric computation, and render an image. The processor 310 may include one or more GPUs that execute instructions to generate or change display information.

The display 394 is configured to display an image, a video, and the like. The display 394 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal device 300 can include one or N displays 394, where N is a positive integer greater than 1.

The terminal device 300 may implement a shooting function by using the ISP, one or more cameras 393, the video codec, the GPU, one or more displays 394, the application processor, and the like.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the terminal device 300, for example, image recognition, facial recognition, voice recognition, and text understanding, can be implemented by using the NPU.

The external memory interface 320 may be configured to connect to an external memory card, for example, a micro SD card, to extend a storage capability of the terminal device 300. The external storage card communicates with the processor 310 through the external memory interface 320, to implement a data storage function. For example, data files such as music, a photo, and a video are stored in the external memory card.

The internal memory 321 may be configured to store one or more computer programs, and the one or more computer programs include instructions. The processor 310 may run the instructions stored in the internal memory 321, so that the terminal device 300 performs the conference recording method provided in some embodiments of this application, various function applications, data processing, and the like. The internal memory 321 may include a program storage area and a data storage area. The program storage area may store an operating system. The program storage area may further store one or more applications (for example, Gallery and Contacts), and the like. The data storage area may store data (for example, a photo and a contact) created during use of the terminal device 300, and the like. In addition, the internal memory 321 may include a high-speed random access memory, and may further include a nonvolatile memory, for example, at least one magnetic disk storage device, a flash memory, or a universal flash storage (universal flash storage, UFS). In some embodiments, the processor 310 may run the instructions stored in the internal memory 321 and/or the instructions stored in the memory that is disposed in the processor 310, to enable the terminal device 300 to perform the conference recording method provided in embodiments of this application, various function applications, and data processing.

The terminal device 300 may implement an audio function by using the audio module 370, the speaker 370A, the receiver 370B, the microphone 370C, the headset jack 370D, the application processor, and the like. For example, the audio function includes music playing, recording, and the like. The audio module 370 is configured to convert digital audio information into an analog audio signal for output, and is also configured to convert an analog audio input into a digital audio signal. The audio module 370 may be configured to code and decode an audio signal. In some embodiments, the audio module 370 may be disposed in the processor 310, or some functional modules in the audio module 370 are disposed in the processor 310. The speaker 370A, also referred to as a "horn", is configured to convert an audio electrical signal into a sound signal. The terminal device 300 may listen to music or answer a call in a hands-free mode by using the speaker 370A. The receiver 370B, also referred to as an "earpiece", is configured to convert an audio electrical signal into a sound signal. When a call is answered or voice information is received by using the terminal device 300, the receiver 170B may be put close to a human ear to listen to a voice. The microphone 370C, also referred to as a "mike" or a "mic", is configured to convert a sound signal into an electrical signal. When making a call or sending voice information, the user may make a sound near the microphone 370C through the mouth of the user, to input a sound signal to the microphone 370C. At least one microphone 370C may be disposed in the terminal device 300. In some other embodiments, two microphones 370C may be disposed in the terminal device 300, to collect a sound signal and implement a noise reduction function. In some other embodiments, three, four, or more microphones 370C may alternatively be disposed in the terminal device 300, to collect a sound signal, implement noise reduction, identify a sound source, implement a directional recording function, and the like. The headset jack 370D is configured to be connected to a wired headset. The headset jack 370D may be the USB port 330, or may be a 3.5 mm open mobile terminal platform (open mobile terminal platform, OMTP) standard interface or a cellular telecommunications industry association of the USA (cellular telecommunications industry association of the USA, CTIA) standard interface.

The sensor 380 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 390 includes a power button, a volume button, and the like. The button 390 may be a mechanical button, or may be a touch button. The terminal device 300 may receive a button input, and generate a button signal input related to a user setting and function control of the terminal device 300.

The SIM card interface 395 is configured to be connected to a SIM card. The SIM card may be inserted into the SIM card interface 395 or detached from the SIM card interface 395, to implement contact with or separation from the terminal device 300. The terminal device 300 can support one or N SIM card interfaces, where N is a positive integer greater than 1. The SIM card interface 395 may support a nano-SIM card, a micro-SIM card, a SIM card, and the like. A plurality of cards may be simultaneously inserted into a same SIM card interface 395. The plurality of cards may be of a same type or different types. The SIM card interface 395 is compatible with different types of SIM cards. The SIM card interface 395 is also compatible with an external memory card. The terminal device 300 interacts with a network by using the SIM card, to implement functions such as calling and data communication. In some embodiments, the terminal device 300 uses an eSIM, namely, an embedded SIM card. The eSIM card can be embedded in the terminal device 300, and cannot be separated from the terminal device 300.

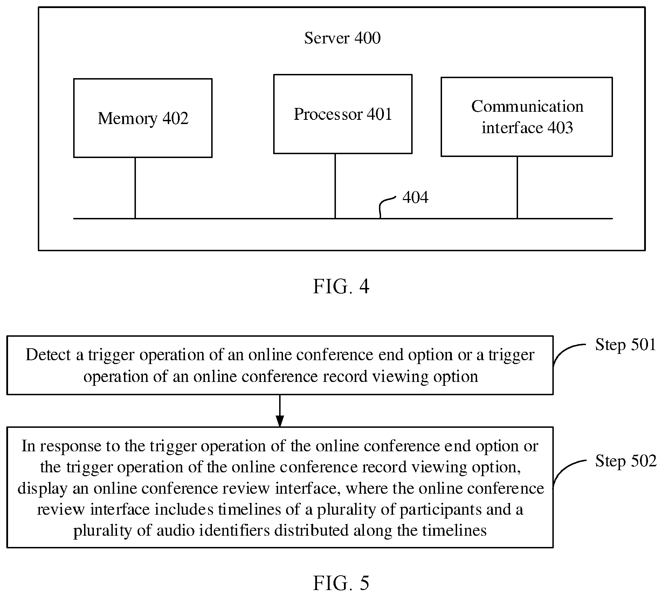

FIG. 4 is a schematic diagram of a structure of a server 400 according to an embodiment of this application. As shown in FIG. 4, the server 400 may be the server in the embodiment shown in FIG. 1. The server 400 includes a processor 401, a memory 402 (one or more computer-readable storage media), and a communication interface 403. These parts may communicate with each other through one or more buses 404.

The processor 401 may be one or more CPUs. When the processor 401 is one CPU, the CPU may be a single-core CPU, or may be a multi-core CPU.

The memory 402 may be connected to the processor 401 through the bus 404, or may be coupled to the processor 401, and is configured to store various kinds of program code and/or a plurality of groups of instructions and data (for example, audio data and video data). During specific implementation, the memory 402 includes but is not limited to a random access memory (Random Access Memory, RAM), a read-only memory (Read-Only Memory, ROM), an erasable programmable read-only memory (Erasable Programmable Read-Only Memory, EPROM), a portable read-only memory (Compact Disc Read-Only Memory, CD-ROM), or the like.

The communication interface 403 is configured to communicate with another device, for example, configured to receive data (for example, a request, audio data, or video data) sent by a terminal device, and send data (for example, audio data or video data) to the terminal device.

It should be understood that the server 400 shown in FIG. 4 is only an example provided in embodiments of this application, and the server 400 may further have more parts than those shown in the figure. This is not specifically limited in embodiments of this application.

In this embodiment of this application, the processor 401 performs various function applications of the server 400 and data processing by running the program code stored in the memory 402.

FIG. 5 is a flowchart of a conference recording method according to an embodiment of this application. The conference recording method is applied to a client that provides a function of an online conference, and the online conference includes an online audio conference or an online video conference. In other words, this embodiment may be executed by any client in FIG. 1. As shown in FIG. 5, the method in this embodiment may include the following steps.

Step 501: Detect a trigger operation of an online conference end option or a trigger operation of an online conference record viewing option.

For example, the client is an application on a terminal device. A participant may use the client to access the online conference. For example, the participant 001 shown in FIG. 2 may use the client 211 to access the online conference. Other participants may use respective clients. For example, the participant 002 may use the client 212 to access the online conference, and the participant 003 may use the client 213 to access the online conference. Communication connections are established, by using a server, between different clients that access the online conference. Audio data, video data, and/or the like may be transmitted between the different clients through the communication connections. For example, when the participant 001 speaks, the client 211 may invoke a microphone of the terminal device to collect audio data of the participant 001, and then transmit the audio data to the other clients, for example, the client 212, the client 213, and the client 214 shown in FIG. 2, through the communication connections. The client 212, the client 213, and the client 214 may separately play the audio data, so that the participant 002, the participant 003, and the participant 004 receive a voice signal of the participant 001. When the other participants speak, a transmission manner of audio data is similar to the foregoing manner, and details are not described herein again. During the online conference, different participants can speak as speakers in different time periods or in a same time period. The client used by the speaker may invoke the microphone of the terminal device to collect audio data of the speaker, and transmit the audio data to a client used by another participant. In this embodiment of this application, audio data of different participants in different time periods or a same time period, and start times and end times/a start time and an end time corresponding to a different time periods or a same time period may be stored. An online conference review interface in the following step 502 is displayed after the online conference ends.

In a possible implementation, a trigger manner of displaying the online conference review interface in the following step 502 may be detecting the trigger operation of the online conference end option. The trigger operation of the online conference end option may be a trigger operation performed on the online conference end option by using a finger of a participant, a stylus, or another control object that can be detected by a touchscreen of the terminal device. The online conference end option may be a control that is displayed on a user interface and that is for exiting the online conference. It should be noted that, the trigger operation of the online conference end option may alternatively be a trigger operation performed, by using another control object, for example, a mouse or a keyboard, connected to the terminal device, by the participant on the online conference end option. Examples are not described in this embodiment of this application.

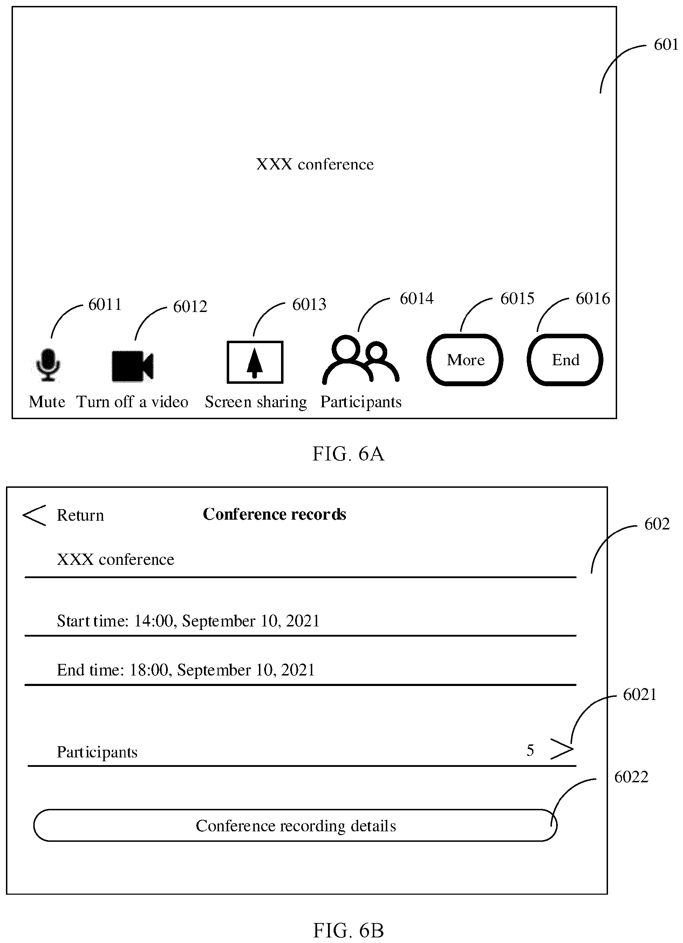

For example, FIG. 6A is a schematic diagram of a user interface for an online conference according to this embodiment of this application. By way of example and not limitation, as shown in FIG. 6A, a display assembly of a terminal device displays a current possible user interface of a client that provides a function of the online conference. The user interface is a main interface 601 during the online conference, and the main interface 601 may display content shown in FIG. 6A. The main interface 601 may specifically include a mute/an unmute control 6011, a video turn-on/turn-off control 6012, a screen sharing control 6013, a member control 6014, a more control 6015, and a conference end control 6016. It should be understood that the main interface 601 may further include more or less other display content. This is not limited in embodiments of this application. The conference end control 6016 may be used as the foregoing online conference end option. The participant performs a clicking operation on the conference end control 6016 shown in FIG. 6A. In response to the clicking operation, the display assembly of the terminal device displays the following online conference review interface.

In another possible implementation, a trigger manner of displaying the online conference review interface in the following step 502 may be detecting the trigger operation of the online conference record viewing option. The trigger operation of the online conference record viewing option may be a trigger operation performed on the online conference record viewing option by using a finger of a participant, a stylus, or another control object that can be detected by a touchscreen of the terminal device. The online conference record viewing option may be a control that is displayed on the user interface and that is for displaying the online conference review interface of the online conference.

For example, FIG. 6B is a schematic diagram of a user interface for an online conference according to this embodiment of this application. By way of example and not limitation, as shown in FIG. 6B, a display assembly of a terminal device displays a current possible user interface of a client that provides a function of the online conference. The user interface is a main interface 602 after the online conference ends, and the main interface 602 may display content shown in FIG. 6B. The main interface 602 may specifically include a participant control 6021 and a conference record control 6022. It should be understood that the main interface 602 may further include more or less other display content. This is not limited in embodiments of this application. The conference record control 6022 may be used as the foregoing online conference record viewing option. The participant performs a clicking operation on the conference record control 6022 shown in FIG. 6B. In response to the clicking operation, the display assembly of the terminal device displays the following online conference review interface.

Step 502: In response to the trigger operation of the online conference end option or the trigger operation of the online conference record viewing option, display the online conference review interface, where the online conference review interface includes timelines of a plurality of participants and a plurality of audio identifiers distributed along the timelines.

Each of the plurality of audio identifiers identifies a segment of audio data of a participant corresponding to the timeline on which the audio identifier is located. A start position of each audio identifier on the timeline indicates a start time of the segment of audio data of the participant, and an end position of each audio identifier on the timeline indicates an end time of the segment of audio data of the participant. The segment of audio data of the participant is generated by recording a conference speech voice signal of the participant in a time period from the start time to the end time.

One or more audio identifiers can be distributed on a timeline of a participant. A quantity of audio identifiers distributed on a timeline of a participant and a length of each audio identifier are related to speech time of the participant in the online conference.

For example, the online conference is a conference of five participants. The online conference review interface may include timelines of the five participants and a plurality of audio identifiers distributed along the timelines. The timelines of the five participants are separately a timeline of a participant 1, a timeline of a participant 2, a timeline of a participant 3, a timeline of a participant 4, and a timeline of a participant 5. Lengths of the timelines of the five participants may be the same or different. In an example, the lengths of timelines of the five participants are the same, a start position of the timelines of the five participants indicates a start moment of the online conference, and an end position of the timelines of the five participants indicates an end moment of the online conference. The start moment of the online conference may be a reserved start moment of a reserved online conference, or may be an initiation moment of a temporary online conference, or may be an access moment of a client that first accesses the online conference among five clients, or the like. The end moment of the online conference may be a reserved end moment of a reserved online conference, or may be an exit moment of a client that last exits the online conference among the five clients, or the like.

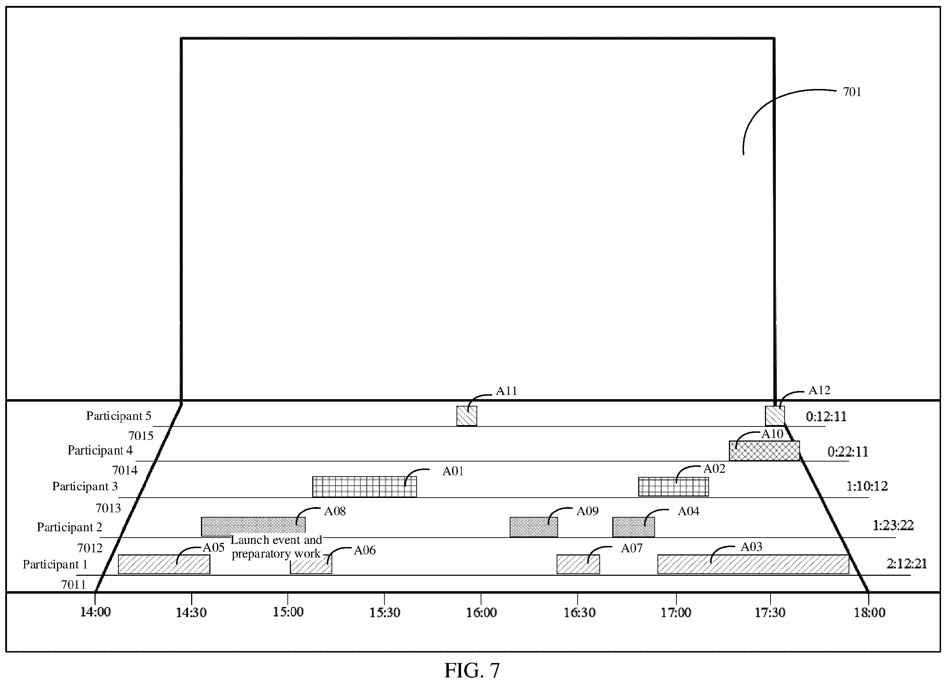

For example, FIG. 7 is a schematic diagram of a user interface for an online conference according to an embodiment of this application. By way of example and not limitation, as shown in FIG. 7, a display assembly of a terminal device displays a current possible user interface of a client that provides a function of the online conference. The user interface is a main interface 701 after the online conference ends, and the main interface 701 may display content shown in FIG. 7. The main interface 701 may specifically include timelines of five participants and a plurality of audio identifiers distributed along the timelines. The timelines of the five participants are separately a timeline 7011 of a participant 1, a timeline 7012 of a participant 2, a timeline 7013 of a participant 3, a timeline 7014 of a participant 4, and a timeline 7015 of a participant 5. The timeline 7011 of the participant 1, the timeline 7012 of the participant 2, the timeline 7013 of the participant 3, the timeline 7014 of the participant 4, and the timeline 7015 of the participant 5 have a same length. A start position of the timelines of the five participants indicates a start moment of the online conference, for example, 14:00 Beijing time. The start position of the timelines of the five participants indicates an end moment of the online conference, for example, 18:00 Beijing time. After the online conference starts, the participant 1 speaks first, and a segment of audio data of the participant 1 is obtained. An audio identifier of the segment of audio data is A05. A start position of A05 on the timeline of the participant 1 indicates a start time of the segment of audio data of the participant 1, that is, a start time of the current speech of the participant 1. An end position of A05 on the timeline of the participant 1 indicates an end time of the segment of audio data of the participant 1, that is, an end time of the current speech of the participant 1. Then, the participant 2 speaks, and a segment of audio data of the participant 2 is obtained. An audio identifier of the segment of audio data is A08. A start position of A08 on the timeline of the participant 2 indicates a start time of the segment of audio data of the participant 2, that is, a start time of the current speech of the participant 2. An end position of A08 on the timeline of the participant 2 indicates an end time of the segment of audio data of the participant 2, that is, an end time of the current speech of the participant 2. By analogy, different participants speak, and one or more segments of audio data of different participants are obtained. Each segment of audio data corresponds to one audio identifier, and a length of each audio identifier may be duration of one speech of a participant, for example, 30 minutes. In this way, after the online conference ends, the online conference review interface shown in FIG. 7 may be generated. Four audio identifiers (A05, A06, A07, and A03) are distributed on the timeline 7011 of the participant 1 on the online conference review interface, three audio identifiers (A08, A09, and A04) are distributed on the timeline 7012 of the participant 2, two audio identifiers (A01 and A02) are distributed on the timeline 7013 of the participant 3, one audio identifier (A10) is distributed on the timeline 7014 of the participant 4, and two audio identifiers (A11 and A12) are distributed on the timeline of the participant 5. The online conference review interface may be used by a user to perform an operation on the online conference review interface. This can reproduce all or a part of a conference scenario in an audio form. It should be understood that the main interface 602 may further include more or less other display content. This is not limited in embodiments of this application. In an example, the audio identifier in FIG. 7 is displayed in a form of a rectangular icon. It may be understood that the audio identifier may alternatively be in another form of an icon. Examples are not described in this embodiment of this application. In addition, height of the rectangular icon is not specifically limited in this embodiment of this application.

Optionally, the online conference review interface may further include total speech duration of each participant in the entire conference. For example, as shown in FIG. 7, the rightmost side of the timeline of each participant displays the total speech duration of the corresponding participant. The participant 1 is used as an example. The total speech duration of the participant 1 is 2 hours, 12 minutes, and 21 seconds (2:12:21).

In this embodiment, the trigger operation of the online conference end option or the trigger operation of the online conference record viewing option is detected, the online conference review interface is displayed in response to the trigger operation of the online conference end option or the trigger operation of the online conference record viewing option. The online conference review interface includes timelines of the plurality of participants and the plurality of audio identifiers distributed along the timelines. Each of the plurality of audio identifiers identifies a segment of audio data of a participant corresponding to the timeline on which the audio identifier is located. A start position of each audio identifier on the timeline indicates a start time of the segment of audio data of the participant, and an end position of each audio identifier on the timeline indicates an end time of the segment of audio data of the participant. The segment of audio data of the participant is generated by recording a conference speech voice signal of the participant in a time period from the start time to the end time. The online conference review interface may be used by a user to perform an operation on the online conference review interface after the online conference ends. This can reproduce all or a part of the conference scenario in the audio form. In this way, after the online conference ends, conference recording information in a participant dimension and a time dimension can be provided to the participant on the online conference review interface, and the participant can filter required information based on a participant and/or a time node, to reproduce all or a part of the conference scenario. The online conference review interface can provide a conference recording function of quickly and effectively locating the required target information, and help improve efficiency of searching for and locating the target information in the conference record.

For example, after the online conference ends, the participant needs to search for specific content of a preparation work allocated by the participant 1 at about 15:00. Difficulty in locating information from a text can be increased by using a manner in which a dialog during an entire conference is recorded by using a text, and then information is searched for by using a keyword. For example, the participant inputs a keyword "prepare work" after the online conference ends. However, because the participant 1 speaks in the online conference and says "preparatory work", the voice is converted into a text, and the text also records "preparatory work". In this way, the keyword "prepare work" input by the participant after the online conference ends online cannot match the "preparatory work" recorded in the text. In addition, even if audio data of a dialog during an entire conference is stored, because the audio data and the text are independent of each other, when the participant cannot locate the information to be searched for by using the keyword, the participant usually needs to search for the required information by playing the audio data, and cannot accurately locate the audio data where the required information is located. As a result, the participant cannot quickly find the required information. Different from this manner, the conference recording method in this embodiment of this application can provide the online conference review interface. After the online conference ends, based on a participant (that is, the participant 1 herein) and a time node (15:00), the participant clicks an audio identifier A06 on the online conference review interface, to play audio data corresponding to the audio identifier A06, reproduce a speech of the participant 1 in an audio form, and learn of specific content of the preparation work allocated by the participant 1 at about 15:00. This can locate the required information more simply, intuitively, and quickly, and help improve efficiency of searching for and locating the target information in the conference record. Replacing a text with the audio data can resolve problems such as finding failure and difficult understanding caused by inconsistency between oral expressions and text expressions. Further, a listening mode can be understood by the brain more quickly than a viewing mode, and information can be compared and filtered more quickly.

The segment of audio data identified by each of the foregoing plurality of audio identifiers may be recorded and generated by the client, or may be recorded and generated by the server.

Manner 1: The client records and generates one or more segments of audio data. Specifically, the client may record and generate one or more segments of audio data of a participant that uses the client, and record a start time and an end time of one or more segments of audio data. The client sends the start time and the end time of the one or more segments of audio data, and the one or more segments of audio data to the server, and the server stores the start time and the end time of the one or more segments of audio data, and the one or more segments of audio data to one or more storage units, so that the server can provide the online conference review interface to the client. Each storage unit includes a segment of audio data, a start time of the segment of audio data, and an end time of the segment of audio data. The one or more storage units herein are connected in series by using a group of time pointers of participants that use the client. The audio data in each storage unit may be an audio file.

A client of the participant 3 shown in FIG. 7 is used as an example. The client of the participant 3 may record and generate two segments of audio data of the participant 3, record a start time and an end time of the two segments of audio data, and send, to the server, the start time and the end time of the two segments of audio data, and the two segments of audio data. The server stores the two segments of audio data, and the start time and the end time of the two segments of audio data into two storage units, and obtains two audio identifiers (A01 and A02) distributed along the timeline of the participant 3 in the online conference review interface shown in FIG. 7.

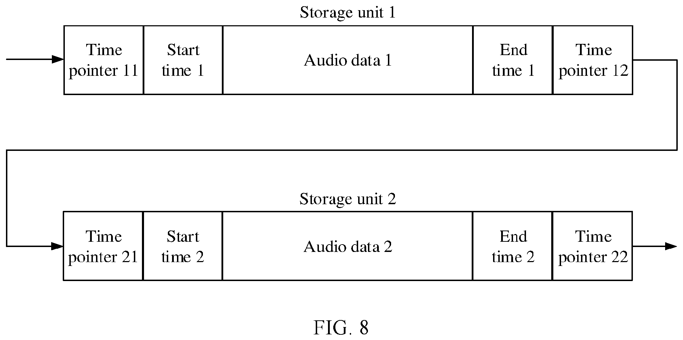

For example, the two storage units of the participant 3 may be a structure shown in FIG. 8. FIG. 8 is a schematic diagram of a storage manner of a conference recording method according to this embodiment of this application. By way of example and not limitation, as shown in FIG. 8, the two storage units of the participant 3 are a storage unit 1 and a storage unit 2. The storage unit 1 includes a time pointer 11, a start time 1, audio data 1, an end time 1, and a time pointer 12. The time pointer 11 may point to the start time 1. The start time 1 may be a start time of a first segment of speech of the participant 3, the audio data 1 includes audio data of the first segment of speech of the participant 3, and the end time 1 may be an end time of the first segment of speech of the participant 3. The time pointer 12 may point to a time pointer 21 of the storage unit 2. The storage unit 2 includes the time pointer 21, a start time 2, audio data 2, an end time 2, and a time pointer 22. The time pointer 21 may point to the start time 2. The start time 2 may be a start time of a second segment of speech of the participant 3, the audio data 2 includes audio data of the second segment of speech of the participant 3, and the end time 2 may be an end time of the second segment of speech of the participant 3. Therefore, the two storage units may be connected in series by using a group of time pointers of the participant 3. The group of time pointers includes the time pointer 11, the time pointer 12, the time pointer 21, and the time pointer 22.

Manner 2: The server records and generates a plurality of segments of audio data. Specifically, the server may record and generate one or more segments of audio data of a participant that uses each client, record start times and end times of the one or more segments of audio data, and store the one or more segments of audio data of the participants that uses each client, the start times and end times of the one or more segments of audio data to one or more storage units of each client, so that the server can provide the online conference review interface for each client. A specific form of each storage unit may be the same as that in the foregoing manner 1, and details are not described herein again.

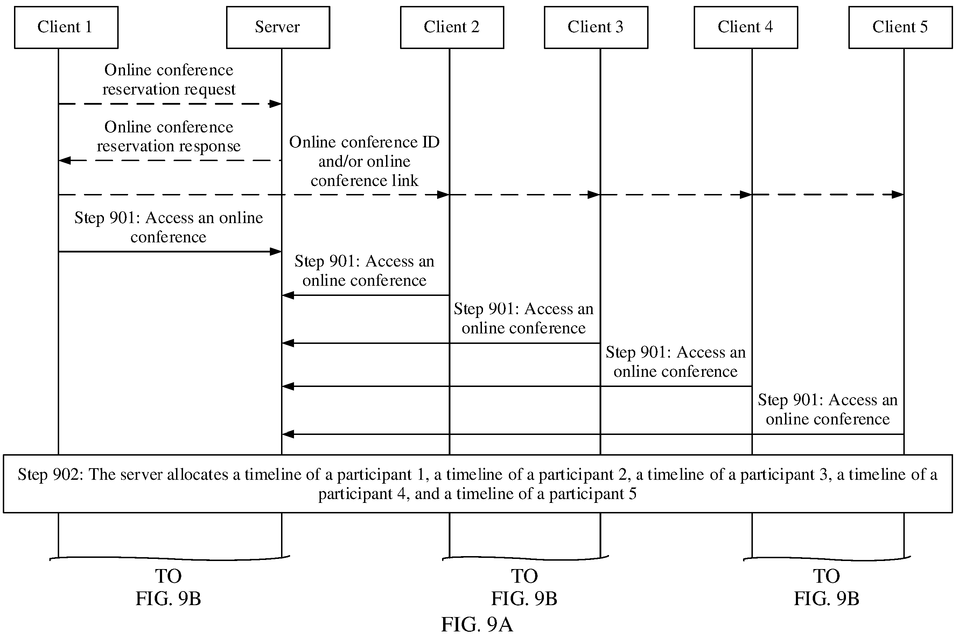

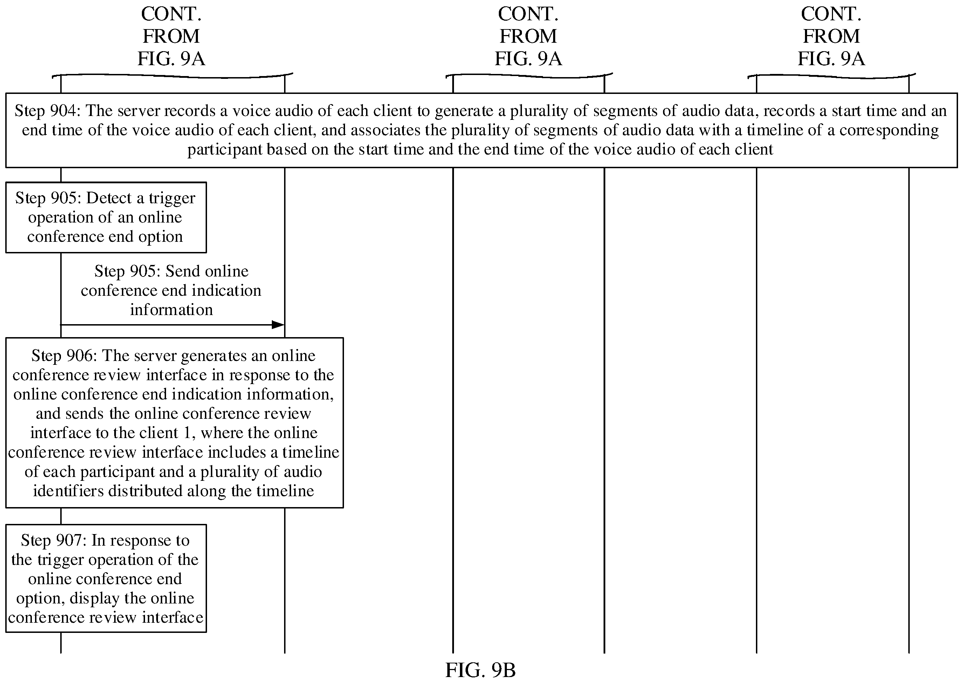

FIG. 9A and FIG. 9B are a flowchart of a conference recording method according to an embodiment of this application. The conference recording method is applied to a system that provides a function of an online conference, and the online conference includes an online audio conference or an online video conference. As shown in FIG. 9A and FIG. 9B, this embodiment is described by using an example in which the system includes five clients (that is, a client 1 of a participant 1, a client 2 of a participant 2, a client 3 of a participant 3, a client 4 of a participant 4, and a client 5 of a participant 5) and one server. The method in this embodiment may include the following steps.

Step 901: The client 1 accesses the online conference, the client 2 accesses the online conference, the client 3 accesses the online conference, the client 4 accesses the online conference, or the client 5 accesses the online conference.

The client 1, client 2, client 3, client 4, and client 5 separately access a same online conference. The online conference can be identified by a conference ID. For example, the participant 1, the participant 2, the participant 3, the participant 4, and the participant 5 separately access a same online conference at a same moment or different moments in a time period by clicking a conference link or inputting a conference ID.

In a possible implementation, the online conference may be reserved. For example, as shown by dashed lines in FIG. 9A and FIG. 9B, before step 901, the client 1 may send an online conference reservation request to the server. The online conference reservation request may include a conference subject, a conference start time, a conference end time, and information about a plurality of participants. The conference start time is later than time when the online conference reservation request is sent. The application scenario of this embodiment is used as an example. The information about the plurality of participants may include identification information of the participant 2, identification information of the participant 3, identification information of the participant 4, and identification information of the participant 5. The server allocates an online conference ID and/or an online conference link based on the online conference reservation request. The online conference ID and/or the online conference link are/is used by clients used by different participants to access the online conference. The server sends an online conference reservation response to the client 1. The online conference reservation response may include the online conference ID and/or the online conference link. The client 1 may send the online conference ID and/or the online conference link to the client 2, the client 3, the client 4, and the client 5. In addition, the server may further store the foregoing conference subject, the conference start time, the conference end time, identification information of the participant 1, the identification information of the participant 2, the identification information of the participant 3, the identification information of the participant 4, and the identification information of the participant 5. Certainly, it may be understood that the online conference reservation request may further include other information such as a conference agenda. This is not specifically limited in this embodiment of this application.

In another possible implementation, the online conference may also be temporary, that is, the online conference is not reserved in advance. For example, the client 1 may temporarily initiate an online conference, that is, when the online conference is initiated, the online conference has started. After accessing the online conference, the client 1 may separately send the online conference ID and/or the online conference link to the client 2, the client 3, the client 4, and the client 5. The client 2, the client 3, the client 4, and the client 5 may separately access the online conference based on the online conference ID or the online conference link. In addition, the server may further store the conference start time (that is, time when the client 1 initiates an online conference) and the information about a plurality of participants. The application scenario of this embodiment is used as an example. The information about the plurality of participants may include the identification information of the participant 1, the identification information of the participant 2, the identification information of the participant 3, the identification information of the participant 4, and the identification information of the participant 5.

Step 902: The server allocates a timeline of the participant 1, a timeline of the participant 2, a timeline of the participant 3, a timeline of the participant 4, and a timeline of the participant 5.

For specific explanations and descriptions of the timeline of each participant, refer to the specific explanations and descriptions of step 502 in the embodiment shown in FIG. 5. Details are not described herein again.

In a possible implementation, for a reserved online conference or a temporary online conference, the server allocates the timeline of the participant 1 in response to a case in which the client 1 accesses the online conference, the server allocates the timeline of the participant 2 in response to a case in which the client 2 accesses the online conference, the server allocates the timeline of the participant 3 in response to a case in which the client 3 accesses the online conference, the server allocates the timeline of the participant 4 in response to a case in which the client 4 accesses the online conference, and the server allocates the timeline of the participant 5 in response to a case in which the client 5 accesses the online conference.

In another possible implementation, for a reserved online conference, in response to the arrival of the conference start time of the reserved online conference or detecting that any client (that is, the client 1, the client 2, the client 3, the client 4, or the client 5) accesses the online conference, the server allocates, based on the stored identification information of the participant of the online conference, the timeline of the participant 1, the timeline of the participant 2, the timeline of the participant 3, the timeline of the participant 4, and the timeline of the participant 5.

It should be noted that a sequence of step 901 and step 902 is not limited by a sequence number, and may also be another sequence. For example, when the client 1 accesses the online conference, the server may allocate the timeline of the participant 1 without waiting for other clients to access the online conference.

The server may store respective audio data along the timeline of each participant in a subsequent online conference.

Specifically, the server may create a group of time pointers for each participant, and connect a plurality of storage units of the participant in series through the time pointer of each participant, so that the storage units connected in series point to a same participant. The storage units connected in series are configured to store audio data of participants.

Step 904: The server records a voice audio of each client to generate a plurality of segments of audio data, records a start time and an end time of the voice audio of each client, and associates the plurality of segments of audio data with a timeline of a corresponding participant based on the start time and the end time of the voice audio of each client.

During the conference, the server records the audio data of each segment of speech of each participant, and stores the audio data of each segment of speech in a storage unit. Each storage unit stores the start time of a segment of speech, the audio data of the segment of speech, and the end time of the segment of speech. In this way, a plurality of storage units storing audio data are connected in series by using a time pointer, so that one or more segments of speeches made by a participant during the conference may be associated with a timeline of the participant.

For a specific form of the storage unit, refer to FIG. 8. For specific explanations and descriptions of the storage unit, refer to the explanation and description of the embodiment shown in FIG. 8. Details are not described herein again.

It should be noted that one or more segments of audio data may be stored in the following different manners.
1. Apply for storing the audio data based on permission of a microphone. A microphone of a client used by a participant is used as an example. Unmuting time of the microphone is used as a start time of a segment of speech, and an end time of the microphone is used as an end time of the segment of speech. Within the unmuting time of the microphone, a voice audio picked up by the microphone is recorded to obtain a segment of audio data, and the segment of audio data is stored in a storage unit of the participant. This manner is applicable to an online conference scenario in which the participant unmutes the microphone when the participant starts speaking and mutes the microphone when the participant ends speaking.
2. Store the audio data based on an uplink data stream of the microphone. A microphone of a client used by a participant is used as an example. When it is detected that a voice audio picked up by the microphone is uploaded to the server, an uploading start time is used as a start time of a segment of speech, and an uploading end time is used as an end time of the segment of speech, the voice audio picked up by the microphone is recorded to obtain a segment of audio data, and the segment of audio data is stored in a storage unit of the participant.

In this manner, the audio data is stored in real time, and the server may record the conference along with the online conference, and obtain several segments of audio data by recording the conference in real time. In addition, participants do not need to manage the microphone. They can unmute the microphone during an entire process.

Optionally, in two adjacent segments of speech of a participant, if a time interval between an end time of a previous segment of speech and a start time of a next segment of speech is less than a preset threshold, the two adjacent segments of audio data may be stored in the same storage unit. The preset threshold may be flexibly set based on a requirement. For example, the preset threshold may be 10 seconds.

3. Relink after the conference ends. During an online conference, the microphone can record all of speeches of a participant. If the participant unmutes the microphone, all audio data of the participant is stored in a storage unit during the conference. All audio data of each participant obtained during the conference is obtained sequentially after the online conference ends. Then, all audio data of each participant is processed, to obtain one or more segments of audio data of the actual speech of the participant. For example, after a silent clip is removed and noise reduction processing is performed, the one or more segments of audio data of the actual speech of the participant may be obtained. The one or more segments of audio data of the actual speech are stored separately, and are relinked by using the time pointer, so that the one or more segments of audio data of the participant are distributed based on time.

When all audio data of each participant is relinked and then stored in segments, in addition to performing segmenting from a perspective of time, segmentation may also be performed from a perspective of semantic understanding. If two adjacent segments of speeches belong to a related context, audio data of the two adjacent speeches of speeches may be used as a segment of continuous audio data. This is because a participant may be discussing a same topic with another participant. Therefore, adjacent speeches that belong to the same topic in semantic understanding may be used as a segment of continuous audio data, and a middle silent clip is not removed. Relevance of a same topic may be determined based on semantic understanding. When the relevance is greater than a specified value, it may be determined that the same topic is used. An existing voice processing technology may be directly used for semantic understanding and determining of different paragraph relevance. Details are not described in this embodiment of this application.

For example, it is assumed that the following recordings of the participant A, the participant B, and the participant C are recorded in the conference process:

```
    {
   a timeline of the participant A:
    [14:00:30-14:02:30] A: "... B will report the XX project."
    timelines of the participant B:
```

```
  [14:02:35-14:02:55] B: "I'd like to report the progress of the XX project. The XX
      project is a cooperative development project between the company and XX University."
   [14:03:10-14:03:48] B: "Yes. The XX project is a key technical breakthrough project
```

```
 that the company cooperates with XX teacher. It is mainly about XX and is a weak point in the
```

```
  technology of the company. XX teacher is a top expert and scholar in this field."
```

```
    [14:04:01-14:35:55] B: "Okay, I will continue to report on the XX project. If you have
```

```
 any questions, you can interrupt it at any time. Last week, an experiment of the XX project made
 a milestone progress. Compared with the existing XX series products of the company, a lab test
```

```
 result was ... The above is about the progress of the XX project. Please ask your questions."
         timelines of the participant C:
```

```
      [14:03:00-14:03:05] C: "Slightly interrupt. Is it a project with the XX teacher?"
   [14:03:53-14:03:56] C: "OK. Please continue."
    }
```

Based on semantic understanding, the three segments of speeches of the participant B are highly related to the report of the XX project. Therefore, the three segments of speech clips of the participant B may be integrated into audio data of one storage unit, and speech time of the participant C in the middle is a silent clip.

Step 905: The client 1 detects a trigger operation of an online conference end option, and the client 1 sends online conference end indication information to the server.

For specific explanations and descriptions of the trigger operation of the online conference end option, refer to the explanations and descriptions of step 502 in the embodiment shown in FIG. 5. Details are not described herein again.

After detecting the trigger operation of the online conference end option, the client 1 may send the online conference end indication information to the server. The online conference end indication information indicates the server to generate an online conference review interface.

Step 906: The server generates the online conference review interface in response to the online conference end indication information, and sends the online conference review interface to the client 1, where the online conference review interface includes a timeline of each participant and a plurality of audio identifiers distributed along the timeline.

The server generates the online conference review interface based on the start time and the end time of each segment of audio data, and a plurality of segments of audio data distributed along the timeline of each participant. For example, the server may generate the online conference review interface based on the foregoing plurality of storage units. The online conference review interface may include a timeline of each participant and a plurality of audio identifiers distributed along the timeline. For example, the online conference review interface may be shown in FIG. 7.

Step 907: The client 1 displays the online conference review interface in response to the trigger operation of the online conference end option.

The online conference review interface may be used by a user to perform an operation on the online conference review interface. This can reproduce all or a part of a conference scenario in an audio form. For specific explanations and descriptions of step 907, refer to the explanations and descriptions of step 502 in the embodiment shown in FIG. 5. Details are not described herein again.

In this embodiment, in an online conference process, a voice audio of each client is recorded to generate a plurality of segments of audio data, the start time and the end time of the voice audio of each client are recorded, and the plurality of segments of audio data are associated with a timeline of a corresponding participant based on the start time and the end time of the voice audio of each client. After the online conference ends, an online conference review interface is provided for the client based on the start time and the end time of each segment of audio data, and the recorded a plurality of segments of audio data. The online conference review interface includes timelines of the plurality of participants and the plurality of audio identifiers distributed along the timelines. Each of the plurality of audio identifiers identifies a segment of audio data of a participant corresponding to the timeline on which the audio identifier is located. A start position of each audio identifier on the timeline indicates a start time of the segment of audio data of the participant, and an end position of each audio identifier on the timeline indicates an end time of the segment of audio data of the participant. The online conference review interface may be used by a user to perform an operation on the online conference review interface after the online conference ends. This can reproduce all or a part of the conference scenario in the audio form. In this way, after the online conference ends, conference recording information in a participant dimension and a time dimension can be provided to the participant on the online conference review interface, and the participant can filter required information based on a participant and/or a time node, to reproduce all or a part of a conference scenario. The online conference review interface can provide a conference recording function of quickly and effectively locating the required target information, and help improve efficiency of searching for and locating the target information in the conference record.

In addition, the user can search for fuzzy memory by using the time node and the audio data to filter the target information.

After the online conference review interface is provided by using any one of the foregoing conference recording methods, any one of the following operations performed by the user on the online conference review interface can be detected to present all or a part of a conference scenario. Detect any one of the following operations performed by the user on the online conference review interface, including but not limited to: operations such as hovering, clicking, double-clicking, and dragging. Present all or a part of a conference scenario, including but not limited to presenting a keyword, playing audio data, playing video data, and the like.

### Scenario 1: First trigger operation

The client displays the online conference review interface described above, detects a first trigger operation of one of a plurality of audio identifiers on the online conference review interface. The client displays, in response to the first trigger operation, a keyword of audio data corresponding to the audio identifier. The audio data corresponding to the audio identifier is audio data identified by the audio identifier. The keyword of the audio data may be obtained by processing the audio data. For example, speech-to-text processing is performed on the audio data, and then the keyword is recognized based on semantic understanding.

For example, the first trigger operation may be a hover operation performed by using a mouse or another control object. When the client detects that the mouse or another control object hovers over the one of the plurality of audio identifiers, the client displays the keyword of the audio data corresponding to the audio identifier. For example, when the client detects that the mouse or another control object hovers over the audio identifier A06 shown in FIG. 7, the client displays a keyword "launch event and preparatory work" shown in FIG. 7 above the audio identifier. Certainly, it may be understood that a location of the keyword may alternatively be another location such as below the audio identifier. This is not specifically limited in this embodiment of this application.

### Scenario 2: Second trigger operation

The client displays the online conference review interface described above, detects a second trigger operation corresponding to the one of a plurality of audio identifiers on the online conference review interface. The client plays, in response to the second trigger operation, audio data corresponding to the audio identifier.

For example, the second trigger operation may be a clicking/double-clicking operation. When detecting that an audio identifier is clicked/double-clicked, the client plays the audio data corresponding to the audio identifier. In this way, the user may review conference content from two dimensions: a participant and time, to locate conference content, and can quickly locate a time node of target information that the user needs to search for, and can separately know content that different participants say at the time node. This helps reproduce a conference scenario after the conference.

### Scenario 3: Third trigger operation

The client displays the foregoing online conference review interface, and detects a third trigger operation corresponding to a first audio identifier in the plurality of audio identifiers that is on the online conference review interface and that is from a first timeline to a second timeline. The first audio identifier is distributed on the first timeline, and one or more second audio identifiers are distributed on the second timeline. The first audio identifier and the at least one second audio identifier are different audio identifiers on different timelines, and audio data identified by the first audio identifier and the at least one second audio identifier is different. In response to the third trigger operation, the client displays the first audio identifier on the second timeline, and associates, based on a start time and an end time of the first audio data corresponding to the first audio identifier, the first audio data corresponding to the first audio identifier with the second audio data corresponding to the at least one second audio identifier. That is, the first audio data is associated with the second timeline. Then, the client detects a fourth trigger operation corresponding to the first audio identifier or the at least one second audio identifier, and plays, in response to the fourth trigger operation, the first audio data and the second audio data corresponding to the at least one second audio identifier.

A location of the first audio identifier on the second timeline may be the same as a location of the first audio identifier on the first timeline.

For example, the third trigger operation may be a drag operation. When detecting that the first audio identifier is dragged from the first timeline to the second timeline, the client displays the first audio identifier on the second timeline, and associates the first audio data corresponding to the first audio identifier with the second audio data corresponding to the at least one second audio identifier. Therefore, by dragging the first audio identifier to the second timeline, the first audio data may be associated with a timeline (that is, the second timeline herein) of another participant, so that speeches of different participants may be combined.

In one case, there is an intersection between a time period of the first audio identifier and a time period of the at least one second audio identifier, that is, the participant on the timeline where the first audio identifier is located and the participant on the timeline where the second audio identifier is located have at least one or more speeches in a same time period. The client detects a fourth trigger operation corresponding to the first audio identifier or the at least one second audio identifier, and in response to the fourth trigger operation, plays, based on a time location of the first audio identifier on the second timeline and a time location of the at least one second audio identifier on the second timeline, at least two of a non-intersection part of the first audio data, an intersection part of the first audio data and the at least one piece of second audio data, or a non-intersection part of the at least one piece of second audio data.

An example in which the first audio identifier and a second audio identifier overlap is used. If the dragged first audio identifier and a second audio identifier on the second timeline overlap (also referred to as an intersection), the first audio identifier and the second audio identifier are superimposed and merged based on time, and an association is also established between audio files corresponding to the first audio identifier and the second audio identifier, so that the associated audio files can be controlled synchronously, and one-click playing is implemented.

Optionally, audio files with different audio identifiers may also be merged into one audio file based on time, audio files of different participants are added to different audio tracks, and the merged audio file corresponds to the merged audio identifier. The merged audio identifier may be clicked to play the merged audio file. The merged audio file includes speech content of a plurality of participants.

In this way, if different participants all speak within a period of time, speech content of each participant can be separately listened to by clicking an audio identifier on a timeline of each participant, a plurality of audio identifiers are merged into one audio identifier by dragging the audio identifier, so that speech content of a plurality of participants is simultaneously played. This can reproduce a conference discussion scenario. Especially, for content heatedly discussed in the conference, a viewpoint of each person may not be grasped in the conference due to the heated discussion. After the conference, speech content of different participants may be split, converged, and repeatedly analyzed based on the audio identifier. This can grasp viewpoints of the different participants in the conference.

Optionally, the client may further detect a fifth trigger operation corresponding to the first audio identifier, in response to the fifth trigger operation, display the first audio identifier on the first timeline, and dissociate the first audio data from the second audio data, where the disassociation is used to independently play the first audio data and the second audio data.

The fifth trigger operation may be a reverse operation of the third trigger operation. For example, a drag operation in a direction opposite to the foregoing drag operation. It may be understood that the fifth trigger operation may alternatively be another operation, for example, double-clicking. This is not specifically limited in this embodiment of this application.

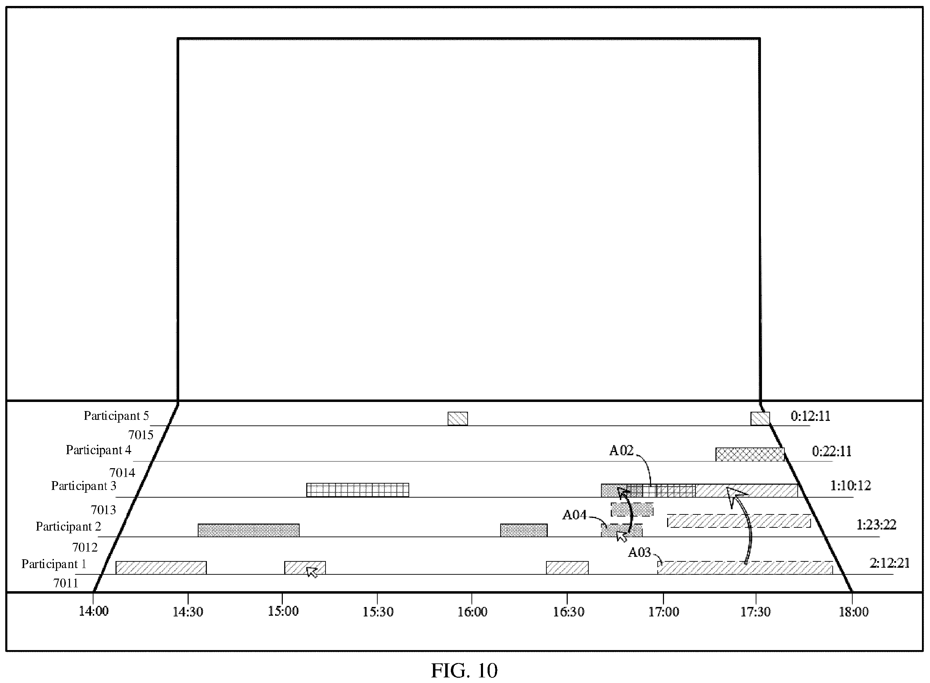

For example, FIG. 10 is a schematic diagram of a user interface for an online conference according to this embodiment of this application. By way of example and not limitation, as shown in FIG. 10, an operation shown in FIG. 10 is performed on the online conference review interface shown in FIG. 7, and the audio identifier A03 on the timeline of the participant 1 is dragged to the timeline of the participant 3. A location of the audio identifier A03 on the timeline of the participant 1 overlaps a location of the audio identifier A02 on the timeline of the participant 3. Therefore, the client may associate audio files identified by the audio identifier A03 and the audio identifier A02 separately. Then, when detecting that the user clicks the associated audio identifier A03 or audio identifier A02, the client may synchronously play the audio files of the audio identifier A03 and the audio identifier A02. Similarly, the audio identifier A04 on the timeline of the participant 2 may be dragged to the timeline of the participant 3. A location of the audio identifier A04 on the timeline of the participant 2 overlaps a location of the audio identifier A02 on the timeline of the participant 3. Therefore, the client may associate audio files identified by the audio identifier A03, the audio identifier A02, and the audio identifier A04 separately. Then, when detecting that the user clicks the associated audio identifier A03, audio identifier A02, or audio identifier A04, the client may synchronously play audio files of the audio identifier A03, the audio identifier A02, and the audio identifier A04. In this way, the speeches of the participant 1, participant 2, and participant 3 can be played.

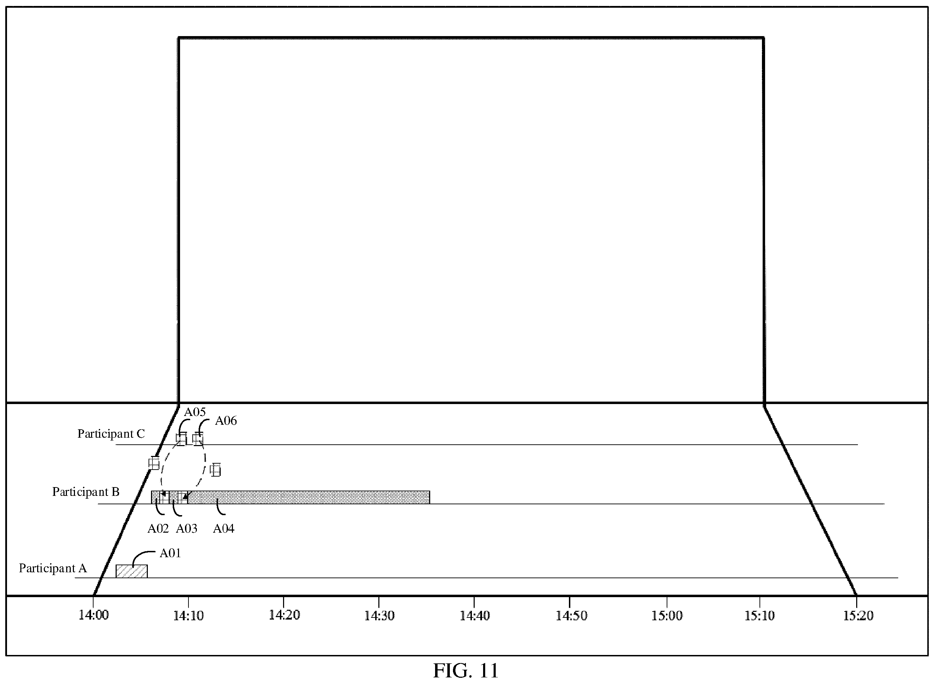

For another example, FIG. 11 is a schematic diagram of a user interface for an online conference according to an embodiment of this application. By way of example and not limitation, as shown in FIG. 11, the online conference review interface includes a timeline of a participant A, a timeline of a participant B, and a timeline of a participant C. An audio identifier A01 is distributed on the timeline of the participant A, three audio identifiers (A02, A03, and A04) are distributed on the timeline of the participant B, and two audio identifiers (A05 and A06) are distributed on a timeline 7 of the participant C.

A speech clip corresponding to the audio identifier A02 is [14:02:35-14:02:55]. The participant B: "I'd like to report the progress of the XX project. The XX project is a cooperative development project between the company and XX University." A speech clip corresponding to the audio identifier A03 is [14:03:10-14:03:48]. The participant B: "Yes. The XX project is a key technical breakthrough project that the company cooperates with XX teacher. It is mainly about XX and is a weak point in the technology of the company. XX teacher is a top expert and scholar in this field." A speech clip corresponding to the audio identifier A04 is [14:04:01-14:35:55]. The participant B: "Okay, I will continue to report on the XX project. If you have any questions, you can interrupt it at any time. Last week, an experiment of the XX project made a milestone progress. Compared with the existing XX series products of the company, a lab test result was ... The above is about the progress of the XX project. Please ask your questions." A speech clip corresponding to the audio identifier A05 is [14:03:00-14:03:05]. The participant C: "Interrupt for a moment. Is it a project with teacher XX?" A speech clip corresponding to the audio identifier A06 is [14:03:53-14:03:56]. The participant C: "OK, please continue."

The client detects an operation shown in FIG. 11, and drags the audio identifier A05 and the audio identifier A06 of the participant C to the timeline of the participant B. Based on locations of the audio identifier A05 and the audio identifier A06 on the timeline of the participant C, the moved audio identifier A05 and the moved audio identifier A06 fall at the corresponding time points on the timeline of the participant B. In addition, the moved audio identifier A05 and audio identifier A06 overlap with the audio identifier of the participant B, and may be merged into a new audio identifier, that is, an audio identifier with a longer time length on the timeline of the participant B shown in FIG. 11. After the two audio identifiers of the timeline of the participant C are dragged to the timeline of the participant B, speech clips corresponding to the merged new audio identifier are as follows:

```
          {
         a timeline B:
         [14:02:35-14:02:55] B: "I'd like to report the progress of the XX project. The XX
```

```
         project is a cooperative development project between the company and XX University."
         [14:03:00-14:03:05] C: "Slightly interrupt. Is it a project with the XX teacher?"
```

```
         [14:03:10-14:03:48] B: "Yes. The XX project is a key technical breakthrough proje
```

```
ct
         that the company cooperates with XX teacher. It is mainly about XX and is a weak 
```

```
point in the
```

```
         technology of the company. XX teacher is a top expert and scholar in this field."
         [14:03:53-14:03:56] C: "OK. Please continue."
```

```
         [14:04:01-14:35:55] B: "Okay, I will continue to report on the XX project. If you have
 any questions, you can interrupt it at any time. Last week, an experiment of the XX project made
```

```
 a milestone progress. Compared with the existing XX series products of the company, a lab test
 result was ... The above is about the progress of the XX project. Please ask your questions."
          }
 
```

Therefore, when it is detected that the user clicks a new audio identifier on the timeline of the participant B, the foregoing speech clip may be played.

Similarly, a merged audio identifier may be split through a reverse operation, and the association between the audio files may be removed. For example, a double-clicking operation is performed at an original audio identifier location, or an audio identifier is dragged back to an original location. After the splitting, the audio files are disassociated.

In this embodiment, a keyword of audio data corresponding to an audio identifier is displayed on the online conference review interface, so that a user can preliminarily filter audio data based on the keyword. This helps improve efficiency of searching for and locating target information in a conference record. Audio data corresponding to a plurality of audio identifiers is freely associated by dragging the audio identifier, to simultaneously play speech content of a plurality of participants. This can reproduce a conference discussion scenario at that time. For the content that is heatedly discussed in the conference, the audio data corresponding to the audio identifier may be associated or disassociated in a manner of merging or splitting the audio identifier on the online conference review interface after the conference, to simultaneously play the associated audio data or independently play the disassociated audio data, and repeated analysis is performed. This helps grasp opinions of different participants in the heated discussion phase after the conference.

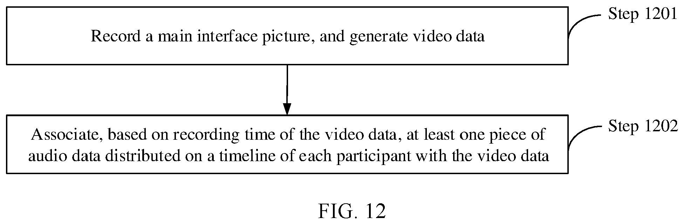

FIG. 12 is a flowchart of a conference recording method according to an embodiment of this application. The conference recording method is applied to a client that provides a function of an online conference or a server that provides a function of an online conference, and the online conference includes an online audio conference or an online video conference. In other words, this embodiment may be executed by any client in FIG. 1 or the server in FIG. 1. As shown in FIG. 12, the method in this embodiment may include the following steps.

Step 1201: Record a main interface picture, and generate video data.

The video data in this embodiment may also be referred to as screen recording data. The main interface picture is content displayed on a main interface of a client that provides a function of an online conference.

In a possible implementation, main interface pictures of all clients that access the online conference are the same. For example, the main interface picture may be a shared desktop or file, and the file may include but is not limited to a slideshow (ppt) or a text file. The shared desktop or file can be a desktop or file shared by any client that accesses an online conference. Optionally, the main interface picture may further include a shared annotation. The shared annotation can be an annotation of a client used by a speaker. Such main interface picture recording is public recording. After the online conference ends, the video data generated by publicly recording the main interface picture can be shared among a plurality of clients.

In another possible implementation, main interface pictures of different clients that access the online conference may be different. For example, the main interface picture includes the shared desktop or file, and an annotation of a participant. Such main interface picture recording is separate recording. For example, a client records a main interface picture of the client, and generates video data of the client. The client provides an annotation function. A participant that uses the client may use the annotation function to annotate content displayed on a screen of the participant. When the participant is not a presenter, the content annotated by the participant can be viewed only by the participant. The annotation function allows a participant to annotate content that the participant thinks is important.

When different participants may annotate separately, main interface pictures of different clients have different participant annotations. Different clients may separately record the main interface pictures of the clients, and different clients may obtain video data of the clients separately. In this way, a personalized conference record including a participant mark and belonging to a participant may be obtained, and a conference record of each participant is different due to different annotation content.

For separate recording, this embodiment may be executed by a client. The client may record a main interface picture of the client, and generate video data of the client, namely, the video data of a participant that uses the client. For separate recording, this embodiment may also be executed by a server. The server may separately record a main interface picture of each client that accesses an online conference, and generate video data of each client, namely, the video data of each participant.

Time for starting recording the main interface picture may be any one of the following: the time when any client accesses an online conference; or the time when a conference start time of a reserved online conference arrives; or the time when any client shares a desktop or a file; or when any participant speaks. The specific time for starting recording the main interface picture may be properly set based on a requirement.

Step 1202: Associate, based on recording time of the video data, at least one piece of audio data distributed on a timeline of each participant with the video data.

Audio data on a timeline of each participant is associated, based on the recording time of the video data, with recorded video data, so that the video data corresponding to the time is synchronously played when the audio data is played. The played audio data may be audio data on a timeline of a participant, or may be audio data associated by a user by performing a drag operation. Similarly, when playing the audio data ends, playing the video data is stopped.

For the video data obtained through public recording, all audio data on a timeline of each participant may be associated with video data at a corresponding time based on a time progress of the video data, so that audio data on timelines of different participants is played, and video data at a corresponding time is synchronously played.

For the video data obtained through separate recording, all audio data on a timeline of a participant that uses the client may be associated with the video data at a corresponding time based on a time progress of the video data of the client, so that the audio data on the timeline of the participant is played, and the video data at the corresponding time is synchronously played.

Audio data identified by an audio identifier on a timeline of a participant is used as an example. The video data associated with the audio data is video data obtained by recording a main interface picture in a time period between a start time and an end time of the audio data.

Correspondingly, when the online conference review interface is displayed, the online conference review interface may further include a video display area. The video display area is used to play video data.

After the client provides the online conference review interface, the following operations performed by the user on the online conference review interface can be detected to present all or a part of a conference scenario.

### Scenario 4: Sixth trigger operation

The client displays the online conference review interface described above, detects a sixth trigger operation corresponding to the one of a plurality of audio identifiers on the online conference review interface, and displays, in response to the sixth trigger operation, a thumbnail of video data corresponding to the audio identifier. The video data corresponding to the audio identifier means video data generated by recording a main interface picture in a time period between a start time and an end time of audio data identified by the audio identifier. The thumbnail of the video data may be a key frame in the video data.

For example, the sixth trigger operation may be a hover operation performed by using a mouse or another control object. When detecting that the mouse or another control object hovers over the one of a plurality of audio identifiers, the client displays the keyword of the audio data corresponding to the audio identifier and the thumbnail of the video data corresponding to the audio identifier.

The client detects a seventh trigger operation of the thumbnail or the audio identifier, and plays, in response to the seventh trigger operation, the video data and the audio data that are corresponding to the audio identifier.

For example, the seventh trigger operation may be a clicking operation performed by using a mouse or another control object. When detecting that the mouse or another control object clicks an audio identifier, the client plays audio data corresponding to the audio identifier and video data corresponding to the audio identifier. The played video data may be presented in the video display area.

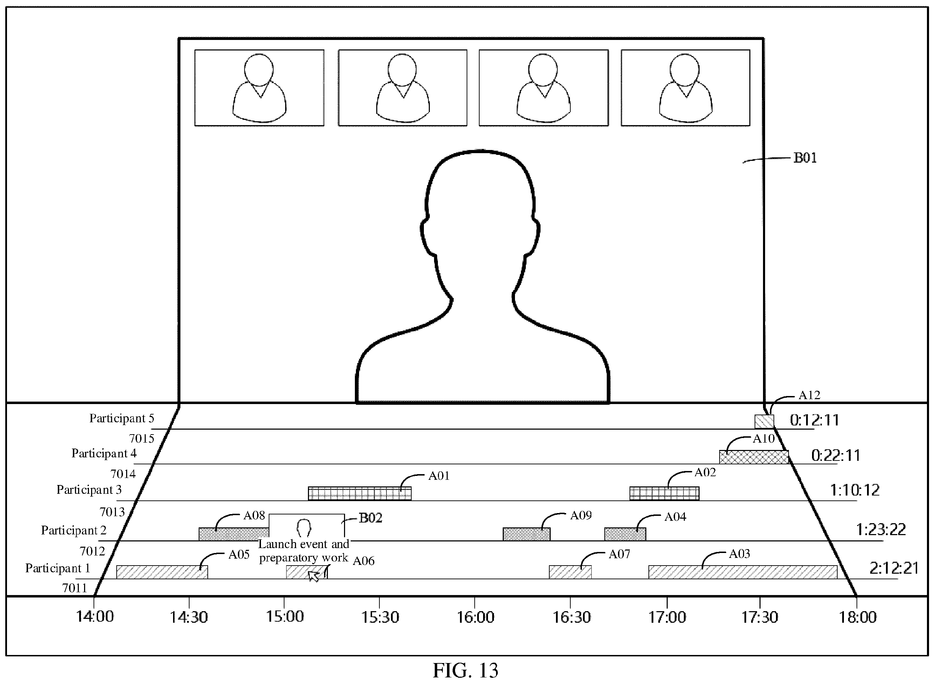

For example, FIG. 13 is a schematic diagram of a user interface for an online conference according to this embodiment of this application. By way of example and not limitation, as shown in FIG. 13, on the basis of the online conference review interface shown in FIG. 7, the online conference review interface in this embodiment may further include a video display area B01. When detecting that the mouse or another control object hovers over an audio identifier A06 shown in FIG. 13, the client displays, above the audio identifier, a keyword "launch event and preparatory work" shown in FIG. 7 and a thumbnail B02 of video data corresponding to the audio identifier. Certainly, it may be understood that the thumbnail may alternatively be at another location such as below the audio identifier. This is not specifically limited in this embodiment of this application. When detecting that the mouse or another control object clicks the audio identifier A06 shown in FIG. 13, the client plays audio data identified by the audio identifier A06, and plays the corresponding video data in the video display area B01.

In this embodiment, by using video data of the recorded main interface picture, audio data on a timeline of each participant is associated with the video data of the recorded main interface picture based on recording time of the video data, so that video data at the same moment is played synchronously when the audio data is played, and a conference scenario at that time can be completely reproduced in a manner of combining audio playing and video playing. This accelerates a process of comparing and determining information.

The main interface picture video recording can be public recording or separate recording. During separate recording, an annotation activity of a participant may be recorded to obtain personalized video data that uniquely belongs to an identifier of the participant. Finally, each participant obtains a conference record video that carries a different annotation.

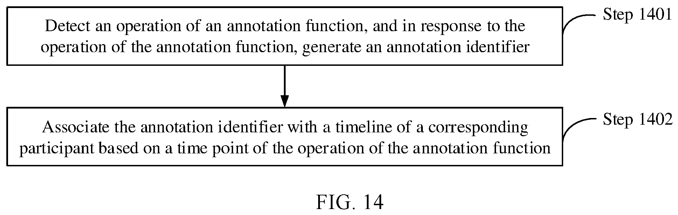

FIG. 14 is a flowchart of a conference recording method according to an embodiment of this application. The conference recording method is applied to a client that provides a function of an online conference, and the online conference includes an online audio conference or an online video conference. In other words, this embodiment may be executed by any client in FIG. 1. As shown in FIG. 14, the method in this embodiment may include the following steps.

Step 1401: Detect an operation corresponding to an annotation function, and in response to the operation corresponding to the annotation function, generate an annotation identifier.

A server and a client can provide the annotation function. During a conference, a participant can annotate key information through the annotation function or mark a time point through a simple annotation. The client may monitor the operation corresponding to the annotation function of the participant in real time, and then the client creates an annotation identifier and records a marked time point based on the operation corresponding to the annotation operation.

Step 1402: Associate the annotation identifier with a timeline of a corresponding participant based on a time point of the operation corresponding to the annotation function.

This embodiment is executed by a client, and the client may associate, based on the time point of the operation corresponding to the annotation function of the participant that uses the client, the annotation identifier with the timeline of the participant that uses the client. The annotation identifier and a record of the audio data do not interfere with each other. Annotation and a speech may be simultaneously performed without affecting the associated timeline of the corresponding participant.

Optionally, after step 1401 and step 1402, the client in this embodiment may further synchronize the associated annotation identifier of the participant that uses the client to the server.

The annotation identifier may be an annotation identifier when the participant serves as a speaker, or may be an annotation identifier when the participant does not serve as a speaker. An annotation identifier when the participant serves as the speaker may be presented on an online conference review interface of another participant, and an annotation identifier when the participant does not serve as the speaker may be presented only on an online conference review interface of the participant, and is invisible on an online conference review interface of another participant.

After the online conference ends, the online conference review interface may include annotation identifiers of all speakers. The annotation identifiers of all speakers are distributed on the timeline of the corresponding participants. Each annotation identifier identifies an annotation of a participant that serves as a speaker and that is corresponding to the timeline on which the annotation identifier is located at a time point at which the annotation identifier is located.

In some embodiments, the online conference review interface may further include an annotation identifier of a participant corresponding to a client that displays the online conference review interface, namely, the annotation identifier obtained when the participant does not serve as the speaker. In this way, when a participant does not serve as a presenter, the participant may make an annotation independently, and view the annotation independently after the conference, to obtain a conference record with a personalized annotation.

After the client provides the online conference review interface, the following operations performed by the user on the online conference review interface can be detected to present all or a part of a conference scenario.

### Scenario 5: Eighth trigger operation

The client displays the foregoing online conference review interface, detects an eighth trigger operation of an annotation identifier on the online conference review interface, and in response to the eighth trigger operation, the client plays audio data, or audio data and video data at a time point at which the annotation identifier is located.

For example, the eighth trigger operation may be a clicking operation or the like. When detecting that the user clicks an annotation identifier, the client plays audio data or audio data and video data at the time point at which the annotation identifier is located.

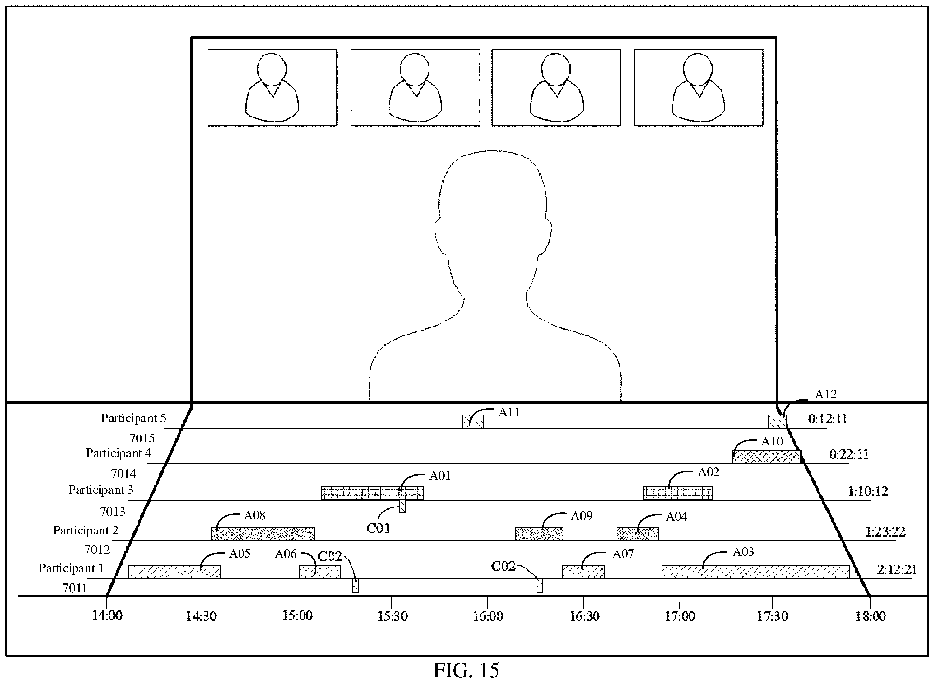

For example, FIG. 15 is a schematic diagram of a user interface for an online conference according to this embodiment of this application. By way of example and not limitation, as shown in FIG. 15, on the basis of the online conference review interface shown in FIG. 7, the online conference review interface in this embodiment may further include one annotation identifier C01 and two annotation identifiers C02. When detecting that the annotation identifier C01 shown in FIG. 15 is clicked, the client plays audio data, or audio data and video data at a time point at which the annotation identifier is located. It should be noted that, the online conference review interface shown in FIG. 15 is an interface displayed by a client used by a participant 1. As shown in FIG. 15, for the participant 1, the annotation identifier C01 is annotated when a participant 3 serves as a presenter, and the two annotation identifiers C02 are annotated by the participant 1. The two annotation identifiers C02 are provided only for the participant 1. Certainly, it may be understood that the two annotation identifiers C02 may also be provided for another participant. This is not specifically limited in this embodiment of this application.

In this embodiment, by detecting the operation corresponding to the annotation function of the participant, a corresponding annotation identifier is generated, and is linked to a timeline of the corresponding participant. After the online conference ends, a time node of key content may be quickly located by using the annotation identifier, and audio data, or audio data and video data of the time node are directly played.

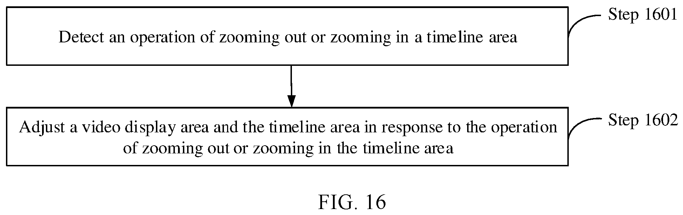

FIG. 16 is a flowchart of a conference recording method according to an embodiment of this application. The conference recording method is applied to a client that provides a function of an online conference, and the online conference includes an online audio conference or an online video conference. In other words, this embodiment may be executed by any client in FIG. 1. The online conference review interface is obtained by using the foregoing embodiments. The conference interface may include a video display area and a timeline area. The timeline area includes timelines of a plurality of participants and a plurality of audio identifiers distributed along the timelines. Then, the online conference review interface may be adjusted by using the method in this embodiment. As shown in FIG. 16, the method in this embodiment may include the following steps.

Step 1601: Detect an operation of zooming out or zooming in the timeline area.

After the online conference review interface is provided by using any one of the foregoing conference recording methods, any one of the following operations performed by the user on the video display area or the timeline area may be detected. The online conference review interface is adjusted, and all or a part of a conference scenario is further presented. The detecting any one of the following operations performed by the user on the video display area or the timeline area includes but is not limited to: operations such as sliding and dragging.

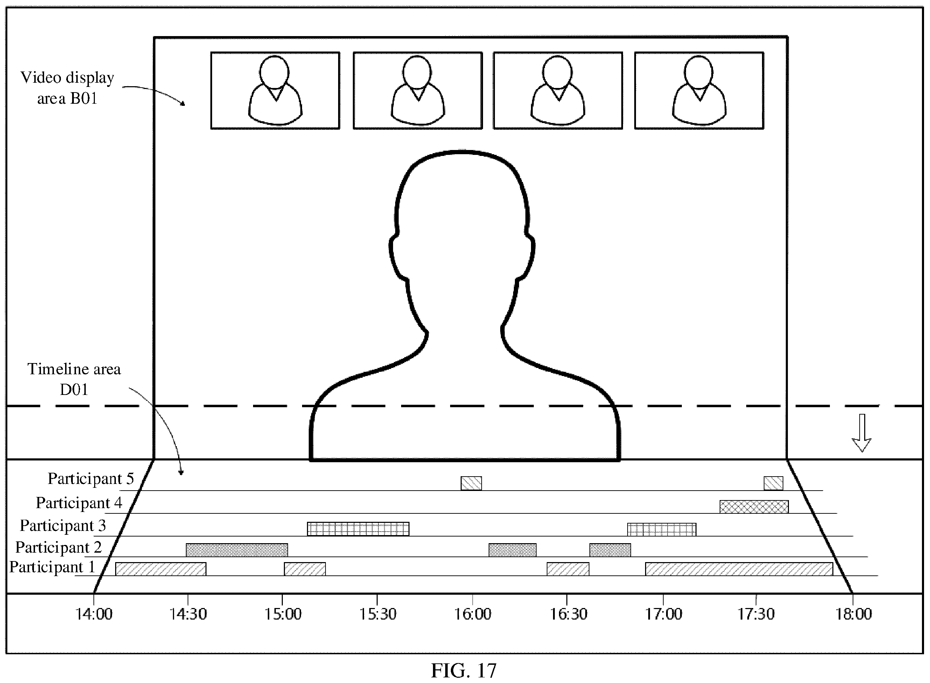

For example, FIG. 17 is a schematic diagram of a user interface for an online conference according to this embodiment of this application. By way of example and not limitation, as shown in FIG. 17, the online conference review interface may include a video display area B01 and a timeline area D01. The video display area B01 is located above the timeline area D01. Certainly, it may be understood that the video display area B01 may also be located below the timeline area D01. In this embodiment of this application, the interface shown in FIG. 17 is used as an example for description. The operation of zooming out the timeline area may be that a finger of the user, a stylus, or another control object that can be detected by a touchscreen of a terminal device acts on the video display area and slides downward; or a finger of the user, a stylus, or another control object that can be detected by a touchscreen of a terminal device acts on the timeline area and slides upward; or a user acts on the video display area and scrolls a scroll wheel downward by using a mouse; or the user acts on the timeline area by using a mouse, and scrolls a scroll wheel upward. Examples are not described in this embodiment of this application. Similarly, the operation of zooming in the timeline area may be a reverse operation of zooming out the timeline area. For example, the operation of zooming in the timeline area may be that a finger of the user, a stylus, or another control object that can be detected by a touchscreen of a terminal device acts on the video display area, and slides upward.

Step 1602: Adjust the video display area and the timeline area in response to the operation of zooming out or zooming in the timeline area.

When the operation of zooming out the timeline area is detected, in response to the operation of zooming out the timeline area, the timeline area is zoomed out, a distance between the timelines of the plurality of participants is zoomed out, and a video display area is zoomed in. The larger video display area can provide the user with clearer conference-record video data playback experience.

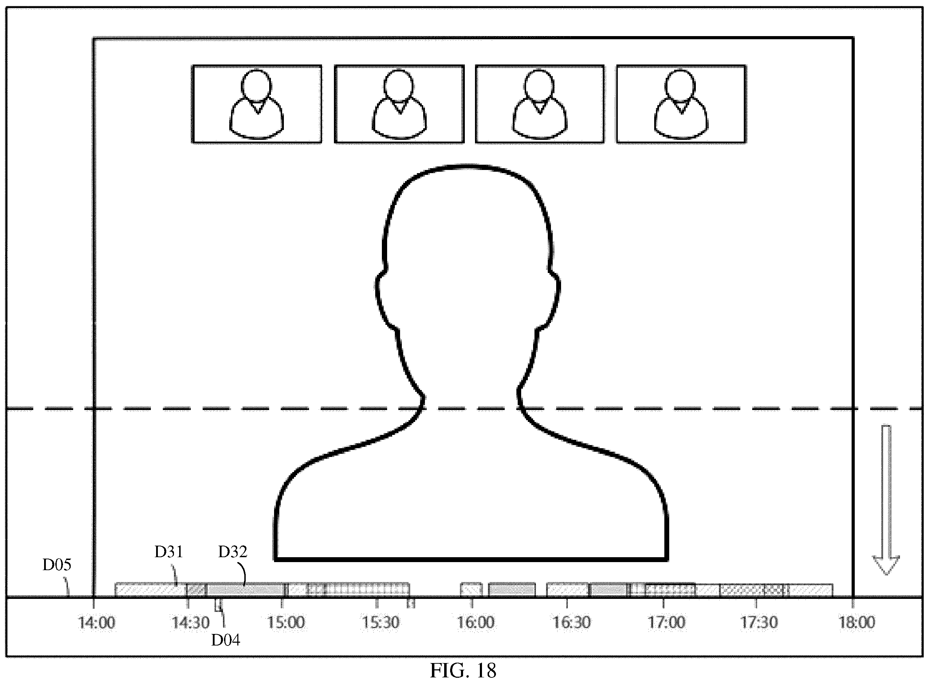

The timeline area can be zoomed out until the timelines of the plurality of participants completely overlap. That is, the timelines of the plurality of participants are combined into one timeline. For example, FIG. 18 is a schematic diagram of a user interface for an online conference according to this embodiment of this application. By way of example and not limitation, as shown in FIG. 18, the timelines of the plurality of participants in the timeline area of the online conference review interface overlap, and the online conference review interface displays a combined timeline D05. The combined timeline D05 may be a timeline of any participant, or a preset total timeline. Each audio identifier and each annotation identifier are displayed on the combined timeline D05 based on positions of each audio identifier on the timeline of each participant and each annotation identifier on the timeline of each participant before combination. For example, as shown in FIG. 18, an audio identifier D31, an audio identifier D32, and an annotation identifier D04 are distributed along the combined timeline. Other audio identifiers and annotation identifiers are not shown one by one herein.

Optionally, audio data of a plurality of audio identifiers distributed on the combined timeline D05 may be associated. In this way, a scenario in which a quantity of persons discusses in an online conference can be reproduced, and is applicable to an overall review of the entire conference.

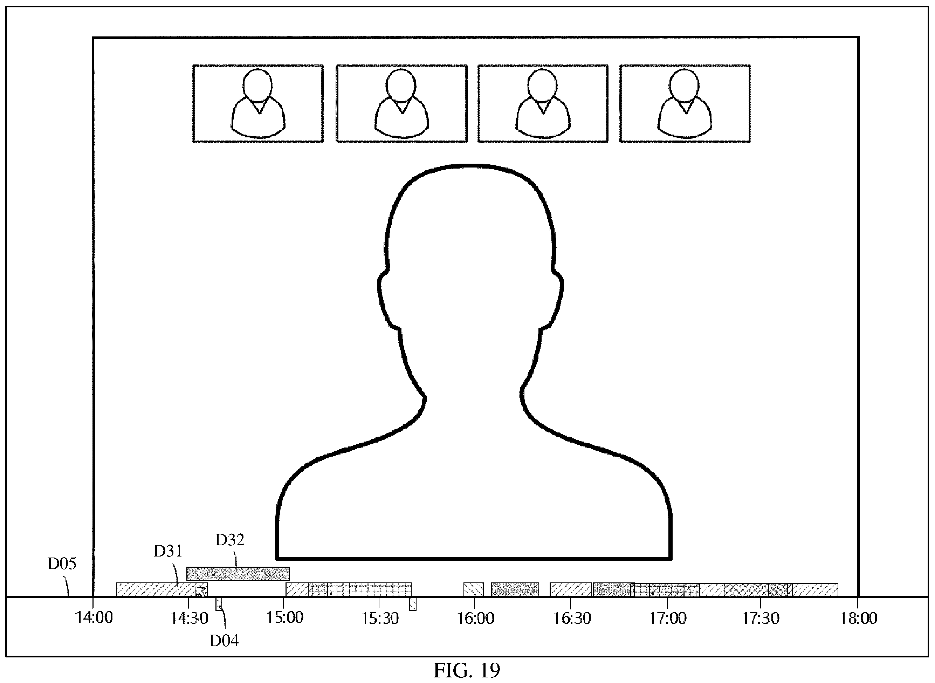

At least two audio identifiers in the plurality of audio identifiers distributed on the combined timeline D05 overlap each other. In this embodiment of this application, a tenth trigger operation corresponding to two audio identifiers that overlap each other may be detected. The tenth trigger operation may be an operation such as clicking or double-clicking on either of the two audio identifiers or an overlapping part of the two audio identifiers. In response to the tenth trigger operation, one of the two audio identifiers is displayed on the combined timeline D05, the other audio identifier is displayed above or below the combined timeline D05, so that the two audio identifiers do not overlap. For example, FIG. 19 is a schematic diagram of a user interface for an online conference according to this embodiment of this application. By way of example and not limitation, the audio identifier D31 and the audio identifier D32 overlap on the combined timeline D05. The user clicks the overlap between the audio identifier D31 and the audio identifier D32, and the audio identifier D31 and the audio identifier D32 are separated from each other, that is, as shown in FIG. 19, in response to the operation of the user clicking the overlap between the audio identifier D31 and the audio identifier D32, the client displays an online conference review interface shown in FIG. 19. The audio identifier D32 may be distributed in a suspended manner in a direction perpendicular to the combined timeline D05, that is, the audio identifier D32 is suspended above the audio identifier D31. Then, the user may separately perform an operation on the audio identifier D31 and the audio identifier D32, to play audio data corresponding to the audio identifier D31 and the audio identifier D32 separately.

When the operation of zooming in the timeline area is detected, in response to the operation of zooming in the timeline area, the timeline area is zoomed in, a distance between the timelines of the plurality of participants is zoomed in, and a video display area is zoomed out. A clearer audio identifier and/or annotation identifier of a conference record may be provided to the user by zooming in the timeline area, to quickly locate audio data and/or annotation identifiers of different participants at different time points.

For example, the timeline area may be zoomed in until the timelines of the plurality of participants completely overlap, that is, the timelines of the plurality of participants are combined into one timeline.

In this embodiment, the timelines of the plurality of participants are combined into one timeline by zooming out the timeline area, and audio data of the plurality of participants is associated. The plurality of pieces of associated audio data are applicable to an overall review of the entire online conference for a user. The larger video display area can provide the user with clearer conference-record video data playback experience. This can flexibly adjust the timeline area and the video display area, and meet a user requirement.

Based on a same inventive concept, an embodiment of this application further provides a conference recording apparatus. The conference recording apparatus may be a chip or a system on chip in a terminal device, or may be a functional module that is in the terminal device and that is configured to implement the method in any one of the foregoing possible implementations. The chip or the system on chip includes a memory. The memory stores instructions. When the instructions are invoked by the system on chip or the chip, the foregoing method is performed.

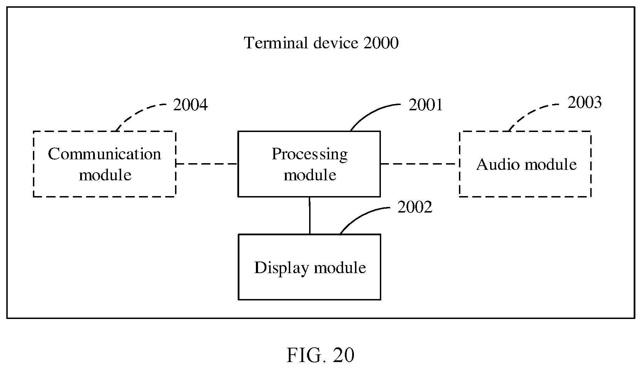

FIG. 20 is a schematic diagram of composition of a conference recording apparatus according to an embodiment of this application. The conference recording apparatus is configured to provide a function of an online conference. The online conference includes an online audio conference or an online video conference. As shown in FIG. 20, a conference recording apparatus 2000 may include a processing module 2001 and a display module 2002.

The processing module 2001 is configured to detect a trigger operation of an online conference end option or a trigger operation of an online conference record viewing option.

The processing module 2001 is further configured to: display, in response to the trigger operation of the online conference end option or the trigger operation of the online conference record viewing option, an online conference review interface by using the display module 2002. The online conference review interface includes timelines of a plurality of participants and a plurality of audio identifiers distributed along the timelines. Each of the plurality of audio identifiers identifies a segment of audio data of a participant corresponding to the timeline on which the audio identifier is located. A start position of the audio identifier on the timeline indicates a start time of the segment of audio data of the participant, an end position of the audio identifier on the timeline indicates an end time of the segment of audio data of the participant. The segment of audio data of the participant is generated by recording a conference speech voice signal of the participant in a time period from the start time to the end time.

For example, the processing module 2001 and the display module 2002 are configured to perform the method steps related to the client 1 in the method embodiment shown in FIG. 5 or FIG. 9A and FIG. 9B.

In some embodiments, the processing module 2001 is further configured to: detect a first trigger operation corresponding to one of the plurality of audio identifiers, and in response to the first trigger operation, display, by using the display module 2002, a keyword of audio data corresponding to the audio identifier.

In some embodiments, the conference recording apparatus may further include an audio module 2003. The processing module 2001 is further configured to: detect a second trigger operation corresponding to the one of the plurality of audio identifiers, and in response to the second trigger operation, play, by using the audio module 2003, the audio data corresponding to the audio identifier.

In some embodiments, the processing module 2001 is further configured to: detect a third trigger operation corresponding to a first audio identifier in the plurality of audio identifiers from a first timeline to a second timeline, where the first audio identifier is distributed on the first timeline, and at least one second audio identifier is distributed on the second timeline; in response to the third trigger operation, display the first audio identifier on the second timeline by using the display module 2002, and associate, based on a start time and an end time of first audio data corresponding to the first audio identifier, the first audio data with second audio data corresponding to the at least one second audio identifier; and detect a fourth trigger operation corresponding to the first audio identifier or the at least one second audio identifier, and in response to the fourth trigger operation, play, by using the audio module 2003, the first audio data and the second audio data corresponding to the at least one second audio identifier.

In some embodiments, there is an intersection between a time period of the first audio identifier and a time period of the at least one second audio identifier, and the playing the first audio data and the second audio data corresponding to the at least one second audio identifier includes: playing, based on a time location of the first audio identifier on the second timeline and a time location of the at least one second audio identifier on the second timeline, at least two of a non-intersection part of the first audio data, an intersection part of the first audio data and the second audio data corresponding to the at least one second audio identifier, or a non-intersection part of the second audio data corresponding to the at least one second audio identifier.

In some embodiments, the processing module 2001 is further configured to: detect a fifth trigger operation corresponding to the first audio identifier, in response to the fifth trigger operation, display, by using the display module 2002, the first audio identifier on the first timeline, and disassociate the first audio data from the second audio data corresponding to the at least one second audio identifier, where the disassociation is used to independently play the first audio data and the second audio data corresponding to the second audio identifier.

In some embodiments, the conference recording apparatus may further include a communication module 2004. The processing module 2001 is further configured to: before the detecting a trigger operation of an online conference end option or a trigger operation of an online conference record viewing option, record and generate, by using the audio module 2003, at least one piece of audio data of the participant that uses the client, and record a start time and an end time of the at least one piece of audio data on a timeline of the participant; and send the start time and the end time of the at least one piece of audio data on the timeline of the participant and the at least one piece of audio data to a server by using the communication module 2004. The start time and the end time of the at least one piece of audio data on the timeline of the participant and the at least one piece of audio data are used to generate the online conference review interface.

In some embodiments, the start time and the end time of the at least one piece of audio data on the timeline of the participant and the at least one piece of audio data are stored in at least one storage unit, and the at least one storage unit is connected in series by using a time pointer of the participant.

In some embodiments, the processing module 2001 is further configured to: detect a sixth trigger operation corresponding to the one of the plurality of audio identifiers, and in response to the sixth trigger operation, display, by using the display module 2002, a thumbnail of video data corresponding to the audio identifier. The video data corresponding to the audio identifier is generated by recording a main interface picture in a time period between a start time and an end time of audio data corresponding to the audio identifier.

In some embodiments, the processing module 2001 is further configured to: detect a seventh trigger operation of the thumbnail, and in response to the seventh trigger operation, play, by using the audio module 2003 and the display module 2002, the video data and the audio data that correspond to the audio identifier.

In some embodiments, the online conference review interface further includes at least one annotation identifier. The at least one annotation identifier is distributed on a timeline of at least one participant, and each of the at least one annotation identifier identifies an annotation of a participant corresponding to the timeline on which the annotation identifier is located at a time point at which the annotation identifier is located.

In some embodiments, the processing module 2001 is further configured to: detect an eighth trigger operation corresponding to one of the at least one annotation identifier, and in response to the eighth trigger operation, play, by using the audio module 2002, audio data of a time point at which the annotation identifier is located, or play audio data and video data by using the audio module 2003 and the display module 2002.

In some embodiments, the timeline of the plurality of participants and the plurality of audio identifiers distributed along the timelines are located in a timeline area of the online conference review interface, and the online conference review interface further includes a video display area. The processing module 2001 is further configured to: detect an operation of zooming out the timeline area, and in response to the operation of zooming out the timeline area, zoom out the timeline area, zoom out a distance between the timelines of the plurality of participants, and zoom in the video display area; or detect an operation of zooming in the timeline area, and in response to the operation of zooming in the timeline area, zoom in the timeline area and zoom out the video display area.

In some embodiments, when the distance between the timelines of the plurality of participants is zoomed out until the timelines of the plurality of participants completely overlap, at least two audio identifiers in the plurality of audio identifiers overlap each other, and the processing module 2001 is further configured to: detect a tenth trigger operation corresponding to two audio identifiers that overlap each other, and in response to the tenth trigger operation, display, by using the display module 2002, one of the two audio identifiers on the timeline, and display the other audio identifier above or below the timeline, so that the two audio identifiers do not overlap.

Certainly, the unit modules in the foregoing conference recording apparatus include but are not limited to the foregoing processing module 2001, display module 2002, and the like. For example, the terminal device may further include a storage module.

In addition, the processing module is one or more processors. The one or more processors, the memory, the communication module, and the like may be connected together, for example, through a bus. The memory is configured to store computer program code, where the computer program code includes instructions. When the processor executes the instructions, the terminal device may perform related method steps in the foregoing embodiment to implement the method in the foregoing embodiment. The communication module may be a wireless communication unit (for example, a wireless communication module 350 or 360 shown in FIG. 3).

An embodiment of this application further provides a computer-readable storage medium. The computer storage medium stores computer software instructions. When the computer software instructions run in an information processing apparatus, the information processing apparatus may perform related method steps in the foregoing embodiment to implement the method in the foregoing embodiment.

An embodiment of this application further provides a computer program product. When the computer program product runs on a computer, the computer is enabled to perform related method steps in the foregoing embodiment to implement the method in the foregoing embodiment.

The terminal device, the computer storage medium, or the computer program product provided in embodiments of this application is configured to perform the corresponding method provided above. Therefore, for beneficial effect that can be achieved, refer to the beneficial effect of the corresponding methods provided above. Details are not described herein again.

The foregoing descriptions about implementations allow persons skilled in the art to clearly understand that, for the purpose of convenient and brief description, division of the foregoing functional modules is taken as an example for illustration. In actual application, the foregoing functions can be allocated to different functional modules for implementation based on a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed methods may be implemented in other manners. For example, the described vehicle-mounted terminal embodiment is only an example. For example, division into the modules or units is only logical function division and may be other division in actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on the understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program instructions, for example, a flash memory, a removable hard disk, a read-only memory, a random access memory, a magnetic disk, or an optical disc.

## Claims

1. A conference recording method performed by a terminal device (2000) configured as a client (211-214) that provides a function of an online conference, the online conference comprises an online audio conference or an online video conference, and the method is **characterized by** comprising:
detecting (501, 905) a trigger operation of an online conference end option or a trigger operation of an online conference record viewing option; and
in response to the trigger operation of the online conference end option or the trigger operation of the online conference record viewing option, displaying (502, 907) an online conference review interface, wherein the online conference review interface comprises timelines (7011-7015) of a plurality of participants and a plurality of audio identifiers distributed along the timelines (7011-7015), each of the plurality of audio identifiers (A01-A12) identifies a segment of audio data of a participant corresponding to a timeline (7011-7015) on which the audio identifier (A01-A12) is located, a start position of the audio identifier (A01-A12) on the timeline (7011-7015) indicates a start time of the segment of audio data of the participant, an end position of the audio identifier on the timeline (7011-7015) indicates an end time of the segment of audio data of the participant, and the segment of audio data of the participant is generated by recording a conference speech voice signal of the participant in a time period from the start time to the end time.

2. The method according to claim 1, wherein the method further comprises:
detecting a first trigger operation corresponding to one of the plurality of audio identifiers (A01-A12), and displaying, in response to the first trigger operation, a keyword of audio data corresponding to the audio identifier (A01-A12).

3. The method according to claim 1 or 2, wherein the method further comprises:
detecting a second trigger operation corresponding to the one of the plurality of audio identifiers (A01-A12), and playing, in response to the second trigger operation, the audio data corresponding to the audio identifier (A01-A12).

4. The method according to any one of claims 1 to 3, wherein the method further comprises:
detecting a third trigger operation corresponding to a first audio identifier in the plurality of audio identifiers (A01-A12) from a first timeline to a second timeline, wherein the first audio identifier is distributed on the first timeline, and at least one second audio identifier is distributed on the second timeline;
in response to the third trigger operation, displaying the first audio identifier on the second timeline, and associating, based on a start time and an end time of first audio data corresponding to the first audio identifier, the first audio data with second audio data corresponding to the at least one second audio identifier; and
detecting a fourth trigger operation corresponding to the first audio identifier or the at least one second audio identifier, and playing, in response to the fourth trigger operation, the first audio data and the second audio data corresponding to the at least one second audio identifier.

5. The method according to claim 4, wherein there is an intersection between a time period of the first audio identifier and a time period of the at least one second audio identifier, and the playing the first audio data and the second audio data corresponding to the at least one second audio identifier comprises:
playing, based on a time location of the first audio identifier on the second timeline and a time location of the at least one second audio identifier on the second timeline, at least two of a non-intersection part of the first audio data, an intersection part of the first audio data and the second audio data corresponding to the at least one second audio identifier, or a non-intersection part of the second audio data corresponding to the at least one second audio identifier.

6. The method according to claim 4 or 5, wherein the method further comprises:
detecting a fifth trigger operation corresponding to the first audio identifier, in response to the fifth trigger operation, displaying the first audio identifier on the first timeline, and dissociating the first audio data from the second audio data corresponding to the at least one second audio identifier, wherein the disassociation is used to independently play the first audio data and the second audio data corresponding to the second audio identifier.

7. The method according to any one of claims 1 to 6, wherein before the detecting a trigger operation of an online conference end option or a trigger operation of an online conference record viewing option, the method further comprises:
recording and generating (904) at least one piece of audio data of a participant that uses the client (211-214), and recording a start time and an end time of the at least one piece of audio data on a timeline (7011-7015) of the participant; and
sending the start time and the end time of the at least one piece of audio data on the timeline (7011-7015) of the participant and the at least one piece of audio data to a server, wherein
the start time and the end time of the at least one piece of audio data on the timeline (7011-7015) of the participant and the at least one piece of audio data are used to generate the online conference review interface.

8. A terminal device (2000), comprising: a processor (2001), a memory, and a display (2002), wherein the memory and the display (2002) are coupled to the processor (2001), the memory is configured to store computer program code, the computer program code comprises computer instructions of a client (211-214) that provides a function of an online conference, the online conference comprises an online audio conference or an online video conference, and when the processor (2001) reads the computer instructions from the memory, the terminal device (2000) is enabled to perform the following operations:
detecting (501, 905) a trigger operation of an online conference end option or a trigger operation of an online conference record viewing option; and
in response to the trigger operation of the online conference end option or the trigger operation of the online conference record viewing option, displaying (502, 907) an online conference review interface, wherein the online conference review interface comprises timelines (7011-7015) of a plurality of participants and a plurality of audio identifiers (A01-A12) distributed along the timelines (7011-7015), each of the plurality of audio identifiers (A01-A12) identifies a segment of audio data of a participant corresponding to a timeline (7011-7015) on which the audio identifier (A01-A12) is located, a start position of the audio identifier (A01-A12) on the timeline (7011-7015) indicates a start time of the segment of audio data of the participant, an end position of the audio identifier (A01-A12) on the timeline (7011-7015) indicates an end time of the segment of audio data of the participant, and the segment of audio data of the participant is generated by recording a conference speech voice signal of the participant in a time period from the start time to the end time.

9. The terminal device (2000) according to claim 8, wherein the terminal device (2000) further performs the following operations:
detecting a first trigger operation corresponding to one of the plurality of audio identifiers (A01-A12), and displaying, in response to the first trigger operation, a keyword of audio data corresponding to the audio identifier (A01-A12).

10. The terminal device (2000) according to claim 8 or 9, wherein the terminal device (2000) further performs the following operations:
detecting a second trigger operation corresponding to the one of the plurality of audio identifiers (A01-A12), and playing, in response to the second trigger operation, the audio data corresponding to the audio identifier (A01-A12).

11. The terminal device (2000) according to any one of claims 8 to 10, wherein the terminal device (2000) further performs the following operations:
detecting a third trigger operation corresponding to a first audio identifier in the plurality of audio identifiers from a first timeline to a second timeline, wherein the first audio identifier is distributed on the first timeline, and at least one second audio identifier is distributed on the second timeline;
in response to the third trigger operation, displaying the first audio identifier on the second timeline, and associating, based on a start time and an end time of first audio data corresponding to the first audio identifier, the first audio data with second audio data corresponding to the at least one second audio identifier; and
detecting a fourth trigger operation corresponding to the first audio identifier or the at least one second audio identifier, and playing, in response to the fourth trigger operation, the first audio data and the second audio data corresponding to the at least one second audio identifier.

12. The terminal device (2000) according to claim 11, wherein there is an intersection between a time period of the first audio identifier and a time period of the at least one second audio identifier, and the playing the first audio data and the second audio data corresponding to the at least one second audio identifier comprises:
playing, based on a time location of the first audio identifier on the second timeline and a time location of the at least one second audio identifier on the second timeline, at least two of a non-intersection part of the first audio data, an intersection part of the first audio data and the second audio data corresponding to the at least one second audio identifier, or a non-intersection part of the second audio data corresponding to the at least one second audio identifier.

13. A computer-readable storage medium, comprising computer instructions, wherein when the computer instructions are run on a terminal device (2000), the terminal device (2000) is enabled to perform the conference recording method according to any one of claims 1 to 12.

14. A computer program product, wherein when the computer program product runs on a computer, the computer is enabled to perform the conference recording method according to any one of claims 1 to 12.

15. A conference recording system, wherein the conference recording system comprises a server and a plurality of clients, the server separately establishes a communication connection with the plurality of clients, and the plurality of clients are separately configured to perform the conference recording method according to any one of claims 1 to 12.

## Patentansprüche

1. Konferenzaufzeichnungsverfahren, das von einer als Client (211-214) konfigurierten Endgerätevorrichtung (2000) durchgeführt wird, zum Bereitstellen einer Funktion einer Online-Konferenz, wobei die Online-Konferenz eine Online-Audiokonferenz oder eine Online-Videokonferenz umfasst, und das Verfahren **dadurch gekennzeichnet ist, dass** es Folgendes umfasst:
Erkennen (501, 905) eines Auslösevorgangs einer Option zum Beenden einer Online-Konferenz oder eines Auslösevorgangs einer Option zum Anzeigen einer Online-Konferenz-Aufzeichnung; und
als Reaktion auf den Auslösevorgang der Option zum Beenden der Online-Konferenz oder des Auslösevorgangs der Option zum Anzeigen der Online-Konferenz-Aufzeichnung, Anzeigen (502, 907) einer Schnittstelle zum Überprüfen der Online-Konferenz, wobei die Schnittstelle zum Überprüfen der Online-Konferenz Zeitleisten (7011-7015) einer Vielzahl von Teilnehmern und eine Vielzahl von Audiokennungen umfasst, die entlang der Zeitleisten (7011-7015) verteilt sind, jede der Vielzahl von Audiokennungen (A01-A12) ein Segment von Audiodaten eines Teilnehmers identifiziert, das einer Zeitleiste (7011-7015) entspricht, auf der sich die Audiokennung (A01-A12) befindet, eine Startposition der Audiokennung (A01-A12) auf der Zeitleiste (7011-7015) eine Startzeit des Segments von Audiodaten des Teilnehmers angibt, eine Endposition der Audiokennung auf der Zeitleiste (7011-7015) eine Endzeit des Segments von Audiodaten des Teilnehmers angibt und das Segment von Audiodaten des Teilnehmers durch Aufzeichnen eines Konferenzrede-Sprachsignal des Teilnehmers in einem Zeitraum von der Startzeit bis zur Endzeit generiert wird.

2. Verfahren nach Anspruch 1, wobei das Verfahren ferner umfasst:
Erkennen eines ersten Auslösevorgangs, der einer der Vielzahl von Audiokennungen (A01-A12) entspricht, und Anzeigen eines Schlüsselworts von Audiodaten entsprechend der Audiokennung (A01-A12), als Reaktion auf den ersten Auslösevorgang.

3. Verfahren nach Anspruch 1 oder 2, wobei das Verfahren ferner Folgendes umfasst:
Erkennen eines zweiten Auslösevorgangs, der einer der Vielzahl von Audiokennungen (A01-A12) entspricht, und Abspielen der Audiodaten, die der Audiokennung (A01-A12) entsprechen, als Reaktion auf den zweiten Auslösevorgang.

4. Verfahren nach einem der Ansprüche 1 bis 3, wobei das Verfahren ferner Folgendes umfasst:
Erkennen eines dritten Auslösevorgangs, der einer ersten Audiokennung in der Vielzahl von Audiokennungen (A01-A12) von einer ersten Zeitleiste zu einer zweiten Zeitleiste entspricht, wobei die erste Audiokennung auf der ersten Zeitleiste verteilt ist und mindestens eine zweite Audiokennung auf der zweiten Zeitleiste verteilt ist;
als Reaktion auf den dritten Auslösevorgang Anzeigen der ersten Audiokennung auf der zweiten Zeitleiste und Verknüpfen der ersten Audiodaten mit zweiten Audiodaten, die der mindestens einen zweiten Audiokennung entsprechen, basierend auf einer Startzeit und einer Endzeit erster Audiodaten, die der ersten Audiokennung entsprechen; und
Erkennen eines vierten Auslösevorgangs, der der ersten Audiokennung oder der mindestens einen zweiten Audiokennung entspricht, und Abspielen der ersten Audiodaten und der zweiten Audiodaten, die der mindestens einen zweiten Audiokennung entsprechen, als Reaktion auf den vierten Auslösevorgang.

5. Verfahren nach Anspruch 4, wobei es eine Überschneidung zwischen einem Zeitraum der ersten Audiokennung und einem Zeitraum der mindestens einen zweiten Audiokennung gibt und das Abspielen der ersten Audiodaten und der zweiten Audiodaten, die der mindestens einen zweiten Audiokennung entsprechen, umfasst: Abspielen von mindestens zwei von einem Nichtüberschneidungsteil der ersten Audiodaten, einem Überschneidungsteil der ersten Audiodaten und der zweiten Audiodaten entsprechend der mindestens einen zweiten Audiokennung, oder einem Nichtüberschneidungsteil der zweiten Audiodaten entsprechend der mindestens einen zweiten Audiokennung, basierend auf einer Zeitposition der ersten Audiokennung auf der zweiten Zeitleiste und einer Zeitposition der mindestens einen zweiten Audiokennung auf der zweiten Zeitleiste.

6. Verfahren nach Anspruch 4 oder 5, wobei das Verfahren ferner Folgendes umfasst:
Erkennen eines fünften Auslösevorgangs, der der ersten Audiokennung entspricht, als Reaktion auf den fünften Auslösevorgang, Anzeigen der ersten Audiokennung auf der ersten Zeitleiste und Trennen der ersten Audiodaten von den zweiten Audiodaten entsprechend der mindestens einen zweiten Audiokennung, wobei das Trennen dazu verwendet wird, die ersten Audiodaten und die zweiten Audiodaten entsprechend der zweiten Audiokennung unabhängig voneinander abzuspielen.

7. Verfahren nach einem der Ansprüche 1 bis 6, wobei das Verfahren vor dem Erkennen eines Auslösevorgangs einer Option zum Beenden einer Online-Konferenz oder eines Auslösevorgangs einer Option zum Anzeigen einer Online-Konferenz-Aufzeichnung ferner umfasst:
Aufzeichnen und Generieren (904) mindestens eines Audiodatenelements eines Teilnehmers, der den Client (211-214) verwendet, und Aufzeichnen einer Startzeit und einer Endzeit des mindestens einen Audiodatenelements auf einer Zeitleiste (7011-7015) des Teilnehmers; und
Senden der Startzeit und der Endzeit des mindestens einen Audiodatenelements auf der Zeitleiste (7011-7015) des Teilnehmers und des mindestens einen Audiodatenelements an einen Server, wobei
die Startzeit und die Endzeit des mindestens einen Audiodatenelements auf der Zeitleiste (7011-7015) des Teilnehmers und des mindestens einen Audiodatenelements zum Generieren der Schnittstelle zum Überprüfen der Online-Konferenz verwendet werden.

8. Endgerätevorrichtung (2000), umfassend: einen Prozessor (2001), einen Speicher und eine Anzeige (2002), wobei der Speicher und die Anzeige (2002) mit dem Prozessor (2001) gekoppelt sind, der Speicher zum Speichern von Computerprogrammcode konfiguriert ist, der Computerprogrammcode Computeranweisungen eines Clients (211-214) zum Bereitstellen einer Funktion einer Online-Konferenz umfasst, die Online-Konferenz eine Online-Audiokonferenz oder eine Online-Videokonferenz umfasst, und wenn der Prozessor (2001) die Computeranweisungen aus dem Speicher liest, die Endgerätevorrichtung (2000) die folgenden Vorgänge ausführen kann:
Erkennen (501, 905) eines Auslösevorgangs einer Option zum Beenden einer Online-Konferenz oder eines Auslösevorgangs einer Option zum Anzeigen einer Online-Konferenz-Aufzeichnung; und
als Reaktion auf den Auslösevorgang der Option zum Beenden der Online-Konferenz oder des Auslösevorgangs der Option zum Anzeigen der Online-Konferenz-Aufzeichnung, Anzeigen (502, 907) einer Schnittstelle zum Überprüfen der Online-Konferenz, wobei die Schnittstelle zum Überprüfen der Online-Konferenz Zeitleisten (7011-7015) einer Vielzahl von Teilnehmern und eine Vielzahl von Audiokennungen umfasst, die entlang der Zeitleisten (7011-7015) verteilt sind, jede der Vielzahl von Audiokennungen (A01-A12) ein Segment von Audiodaten eines Teilnehmers entsprechend einer Zeitleiste (7011-7015) identifiziert, auf der sich die Audiokennung (A01-A12) befindet, eine Startposition der Audiokennung (A01-A12) auf der Zeitleiste (7011-7015) eine Startzeit des Segments von Audiodaten des Teilnehmers angibt, eine Endposition der Audiokennung auf der Zeitleiste (7011-7015) eine Endzeit des Segments von Audiodaten des Teilnehmers angibt und das Segment von Audiodaten des Teilnehmers durch Aufzeichnen eines Konferenzrede-Sprachsignal des Teilnehmers in einem Zeitraum von der Startzeit bis zur Endzeit generiert wird.

9. Endgerätevorrichtung (2000) nach Anspruch 8, wobei die Endgerätevorrichtung (2000) ferner die folgenden Vorgänge durchführt:
Erkennen eines ersten Auslösevorgangs, der einer der Vielzahl von Audiokennungen (A01-A12) entspricht, und Anzeigen eines Schlüsselworts von Audiodaten entsprechend der Audiokennung (A01-A12), als Reaktion auf den ersten Auslösevorgang.

10. Endgerätevorrichtung (2000) nach Anspruch 8 oder 9, wobei die Endgerätevorrichtung (2000) ferner die folgenden Vorgänge durchführt:
Erkennen eines zweiten Auslösevorgangs, der einer der Vielzahl von Audiokennungen (A01-A12) entspricht, und Abspielen der Audiodaten, die der Audiokennung (A01-A12) entsprechen, als Reaktion auf den zweiten Auslösevorgang.

11. Endgerätevorrichtung (2000) nach einem der Ansprüche 8 bis 10, wobei die Endgerätevorrichtung (2000) ferner die folgenden Vorgänge durchführt:
Erkennen eines dritten Auslösevorgangs, der einer ersten Audiokennung in der Vielzahl von Audiokennungen von einer ersten Zeitleiste zu einer zweiten Zeitleiste entspricht, wobei die erste Audiokennung auf der ersten Zeitleiste verteilt ist und mindestens eine zweite Audiokennung auf der zweiten Zeitleiste verteilt ist;
als Reaktion auf den dritten Auslösevorgang Anzeigen der ersten Audiokennung auf der zweiten Zeitleiste und Verknüpfen der ersten Audiodaten mit zweiten Audiodaten, die der mindestens einen zweiten Audiokennung entsprechen, basierend auf einer Startzeit und einer Endzeit erster Audiodaten, die der ersten Audiokennung entsprechen; und
Erkennen eines vierten Auslösevorgangs, der der ersten Audiokennung oder der mindestens einen zweiten Audiokennung entspricht, und Abspielen der ersten Audiodaten und der zweiten Audiodaten, die der mindestens einen zweiten Audiokennung entsprechen, als Reaktion auf den vierten Auslösevorgang.

12. Endgerätevorrichtung (2000) nach Anspruch 11, wobei es eine Überschneidung zwischen einem Zeitraum der ersten Audiokennung und einem Zeitraum der mindestens einen zweiten Audiokennung gibt und das Abspielen der ersten Audiodaten und der zweiten Audiodaten, die der mindestens einen zweiten Audiokennung entsprechen, umfasst:
Abspielen von mindestens zwei von einem Nichtüberschneidungsteil der ersten Audiodaten, einem Überschneidungsteil der ersten Audiodaten und der zweiten Audiodaten entsprechend der mindestens einen zweiten Audiokennung, oder einem Nichtüberschneidungsteil der zweiten Audiodaten entsprechend der mindestens einen zweiten Audiokennung, basierend auf einer Zeitposition der ersten Audiokennung auf der zweiten Zeitleiste und einer Zeitposition der mindestens einen zweiten Audiokennung auf der zweiten Zeitleiste.

13. Computerlesbares Speichermedium, umfassend Computeranweisungen , wobei, wenn die Computeranweisungen auf einer Endgerätevorrichtung (2000) ausgeführt werden, die Endgerätevorrichtung (2000) das Konferenzaufzeichnungsverfahren nach einem der Ansprüche 1 bis 12 durchführen kann.

14. Computerprogrammprodukt, wobei, wenn das Computerprogrammprodukt auf einem Computer ausgeführt wird, der Computer das Verfahren nach einem der Ansprüche 1 bis 12 durchführen kann.

15. Konferenzaufzeichnungssystem, wobei das Konferenzaufzeichnungssystem einen Server und eine Vielzahl von Clients umfasst, der Server separat eine Kommunikationsverbindung mit der Vielzahl von Clients aufbaut und die Vielzahl von Clients separat konfiguriert ist, um das Konferenzaufzeichnungsverfahren nach einem der Ansprüche 1 bis 12 durchzuführen.

## Revendications

1. Procédé d'enregistrement de conférence réalisé par un dispositif terminal (2000) configuré comme un client (211-214) qui fournit une fonction de conférence en ligne, la conférence en ligne comprend une audioconférence en ligne ou une visioconférence en ligne, et le procédé est **caractérisé en ce qu'**il comprend :
la détection (501, 905) d'une opération de déclenchement d'une option de fin de conférence en ligne ou d'une opération de déclenchement d'une option de visionnage d'enregistrement de conférence en ligne ; et
en réponse à l'opération de déclenchement de l'option de fin de conférence en ligne ou à l'opération de déclenchement de l'option de visionnage d'enregistrement de conférence en ligne, l'affichage (502, 907) d'une interface de revisionnage de conférence en ligne, dans lequel l'interface de revisionnage de conférence en ligne comprend des chronologies (7011-7015) d'une pluralité de participants et une pluralité d'identifiants audio répartis le long des chronologies (7011-7015), chacun de la pluralité d'identifiants audio (A01-A12) identifiant un segment de données audio d'un participant correspondant à une chronologie (7011-7015) sur laquelle l'identifiant audio (A01-A12) est situé, une position de début de l'identifiant audio (A01-A12) sur la chronologie (7011-7015) indique une heure de début du segment de données audio du participant, une position de fin de l'identifiant audio sur la chronologie (7011-7015) indique une heure de fin du segment de données audio du participant, et le segment de données audio du participant est généré par enregistrement d'un signal vocal de conférence du participant dans une période allant de l'heure du début à l'heure de fin.

2. Procédé selon la revendication 1, dans lequel le procédé comprend également :
la détection d'une première opération de déclenchement correspondant à l'un de la pluralité d'identifiants audio (A01-A12), et l'affichage, en réponse à la première opération de déclenchement, d'un mot-clé de données audio correspondant à l'identifiant audio (A01-A12).

3. Procédé selon la revendication 1 ou 2, dans lequel le procédé comprend également :
la détection d'une deuxième opération de déclenchement correspondant à l'un de la pluralité d'identifiants audio (A01-A12), et la lecture, en réponse à la deuxième opération de déclenchement, des données audio correspondant à l'identifiant audio (A01-A12).

4. Procédé selon l'une quelconque des revendications 1 à 3, dans lequel le procédé comprend également :
la détection d'une troisième opération de déclenchement correspondant à un premier identifiant audio dans la pluralité d'identifiants audio (A01-A12) d'une première chronologie à une seconde chronologie, dans lequel le premier identifiant audio est distribué sur la première chronologie, et au moins un second identifiant audio est distribué sur la seconde chronologie ;
en réponse à la troisième opération de déclenchement, l'affichage du premier identifiant audio sur la seconde chronologie, et l'association, en fonction d'une heure de début et d'une heure de fin des premières données audio correspondant au premier identifiant audio, des premières données audio aux secondes données audio correspondant à l'au moins un second identifiant audio ; et
la détection d'une quatrième opération de déclenchement correspondant au premier identifiant audio ou à l'au moins un second identifiant audio, et lecture, en réponse à la quatrième opération de déclenchement, des premières données audio et des secondes données audio correspondant à l'au moins un second identifiant audio.

5. Procédé selon la revendication 4, dans lequel il existe une intersection entre une période du premier identifiant audio et une période de l'au moins un second identifiant audio, et la lecture des premières données audio et des secondes données audio correspondant à l'au moins un second identifiant audio comprend :
la lecture, sur la base d'un emplacement temporel du premier identifiant audio sur la seconde chronologie et d'un emplacement temporel de l'au moins un second identifiant audio sur la seconde chronologie, d'au moins deux d'une partie de non-intersection des premières données audio, d'une partie d'intersection des premières données audio et des secondes données audio correspondant à l'au moins un second identifiant audio, ou d'une partie de non-intersection des secondes données audio correspondant à l'au moins un second identifiant audio.

6. Procédé selon la revendication 4 ou 5, dans lequel le procédé comprend également :
la détection d'une cinquième opération de déclenchement correspondant au premier identifiant audio, en réponse à la cinquième opération de déclenchement, l'affichage du premier identifiant audio sur la première chronologie, et la dissociation des premières données audio des secondes données audio correspondant à l'au moins un second identifiant audio, dans lequel la dissociation est utilisée pour lire indépendamment les premières données audio et les secondes données audio correspondant au second identifiant audio.

7. Procédé selon l'une quelconque des revendications 1 à 6, dans lequel avant la détection d'une opération de déclenchement d'une option de fin de conférence en ligne ou d'une opération de déclenchement d'une option de visionnage d'enregistrement de conférence en ligne, le procédé comprend également :
l'enregistrement et la génération (904) d'au moins une partie de données audio d'un participant qui utilise le client (211-214), et l'enregistrement d'une heure de début et d'une heure de fin de l'au moins une partie de données audio sur une chronologie (7011-7015) du participant ; et
l'envoi de l'heure de début et l'heure de fin de l'au moins une partie de données audio sur la chronologie (7011-7015) du participant et l'au moins une partie de données audio à un serveur, dans lequel
l'heure de début et l'heure de fin de l'au moins une partie de données audio sur la chronologie (7011-7015) du participant et l'au moins une partie de données audio sont utilisées pour générer l'interface de revisionnage de conférence en ligne.

8. Dispositif terminal (2000) comprenant : un processeur (2001), une mémoire et un affichage (2002), dans lequel la mémoire et l'affichage (2002) sont couplés au processeur (2001), la mémoire est configurée pour stocker un code de programme informatique, le code de programme informatique comprend les instructions informatiques d'un client (211-214) qui fournit une fonction de conférence en ligne, la conférence en ligne comprend une audioconférence ou une vidéoconférence en ligne, et lorsque le processeur (2001) lit les instructions informatiques en provenance de la mémoire, le dispositif terminal (2000) est activé pour réaliser les opérations suivantes :
la détection (501, 905) d'une opération de déclenchement d'une option de fin de conférence en ligne ou d'une opération de déclenchement d'une option de visionnage d'enregistrement de conférence en ligne ; et
en réponse à l'opération de déclenchement de l'option de fin de conférence en ligne ou à l'opération de déclenchement de l'option de visionnage d'enregistrement de conférence en ligne, l'affichage (502, 907) d'une interface de revisionnage de conférence en ligne, dans lequel l'interface de revisionnage de conférence en ligne comprend des chronologies (7011-7015) d'une pluralité de participants et une pluralité d'identifiants audio (A01-A12) répartis le long des chronologies (7011-7015), chacun de la pluralité d'identifiants audio (A01-A12) identifiant un segment de données audio d'un participant correspondant à une chronologie (7011-7015) sur laquelle l'identifiant audio (A01-A12) est situé, une position de début de l'identifiant audio (A01-A12) sur la chronologie (7011-7015) indique une heure de début du segment de données audio du participant, une position de fin de l'identifiant audio (A01-A12) sur la chronologie (7011-7015) indique une heure de fin du segment de données audio du participant, et le segment de données audio du participant est généré par enregistrement d'un signal vocal de conférence du participant dans une période de temps allant du moment du début au moment de la fin.

9. Dispositif terminal (2000) selon la revendication 8, dans lequel le dispositif terminal (2000) réalise également les opérations suivantes :
la détection d'une première opération de déclenchement correspondant à l'un de la pluralité d'identifiants audio (A01-A12), et l'affichage, en réponse à la première opération de déclenchement, d'un mot-clé de données audio correspondant à l'identifiant audio (A01-A12).

10. Dispositif terminal (2000) selon la revendication 8 ou 9, dans lequel le dispositif terminal (2000) réalise également les opérations suivantes :
la détection d'une deuxième opération de déclenchement correspondant à l'un de la pluralité d'identifiants audio (A01-A12), et la lecture, en réponse à la deuxième opération de déclenchement, des données audio correspondant à l'identifiant audio (A01-A12).

11. Dispositif terminal (2000) selon l'une quelconque des revendications 8 à 10, dans lequel le dispositif terminal (2000) réalise également les opérations suivantes :
la détection d'une troisième opération de déclenchement correspondant à un premier identifiant audio dans la pluralité d'identifiants audio d'une première chronologie à une seconde chronologie, dans lequel le premier identifiant audio est distribué sur la première chronologie, et au moins un second identifiant audio est distribué sur la seconde chronologie ;
en réponse à la troisième opération de déclenchement, l'affichage du premier identifiant audio sur la seconde chronologie, et l'association, en fonction d'une heure de début et d'une heure de fin des premières données audio correspondant au premier identifiant audio, des premières données audio aux secondes données audio correspondant à l'au moins un second identifiant audio ; et
la détection d'une quatrième opération de déclenchement correspondant au premier identifiant audio ou à l'au moins un second identifiant audio, et lecture, en réponse à la quatrième opération de déclenchement, des premières données audio et des secondes données audio correspondant à l'au moins un second identifiant audio.

12. Dispositif terminal (2000) selon la revendication 11, dans lequel il existe une intersection entre une période du premier identifiant audio et une période de l'au moins un second identifiant audio, et la lecture des premières données audio et des secondes données audio correspondant à l'au moins un second identifiant audio comprend :
la lecture, sur la base d'un emplacement temporel du premier identifiant audio sur la seconde chronologie et d'un emplacement temporel de l'au moins un second identifiant audio sur la seconde chronologie, d'au moins deux d'une partie de non-intersection des premières données audio, d'une partie d'intersection des premières données audio et des secondes données audio correspondant à l'au moins un second identifiant audio, ou d'une partie de non-intersection des secondes données audio correspondant à l'au moins un second identifiant audio.

13. Support de stockage lisible par ordinateur, comprenant des instructions informatiques, dans lequel lorsque les instructions informatiques sont exécutées sur un dispositif terminal (2000), le dispositif terminal (2000) est activé pour réaliser le procédé d'enregistrement de conférence selon l'une quelconque des revendications 1 à 12.

14. Produit de programme informatique, dans lequel lorsque le produit de programme informatique est exécuté sur un ordinateur, l'ordinateur est activé pour réaliser le procédé selon l'une quelconque des revendications 1 à 12.

15. Système d'enregistrement de conférence, dans lequel le système d'enregistrement de conférence comprend un serveur et une pluralité de clients, le serveur établit séparément une connexion de communication avec la pluralité de clients, et la pluralité de clients est configurée séparément pour réaliser le procédé d'enregistrement de conférence selon l'une quelconque des revendications 1 à 12.
